(19) Europäisches Patentamt
European Patent Office
Office européen des brevets

(11) **EP 1 860 902 B1**

(12) **FASCICULE DE BREVET EUROPEEN**

(45) Date de publication et mention
de la délivrance du brevet:
**22.10.2014 Bulletin 2014/43**

(51) Int Cl.:
***H04W 16/00*** *(2009.01)*

(21) Numéro de dépôt: **07290660.5**

(22) Date de dépôt: **23.05.2007**

(54) **Procédé d'optimisation de la capacité d'un réseau de téléphonie mobile pour la création de services dont le flux est majoritairement descendant**

Verfahren zur Optimierung der Kapazität eines Mobiltelefonnetzes zur Erzeugung von Diensten, deren Fluss hauptsächlich abwärts gerichtet ist

Method of optimising the capacity of a mobile telephony network for the creation of services with a mainly downlink flow

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.05.2006 FR 0604596**

(43) Date de publication de la demande:
**28.11.2007 Bulletin 2007/48**

(73) Titulaire: **Société Française du Radiotéléphone 75008 Paris (FR)**

(72) Inventeur: **Vincent, François 92140 Clamart (FR)**

(74) Mandataire: **Debay, Yves Cabinet Debay 126 Elysée 2 78170 La Celle Saint Cloud (FR)**

(56) Documents cités:
**WO-A-2004/056146    WO-A-2006/033603**

EP 1 860 902 B1

**EP 1 860 902 B1**

**Description**

La présente invention concerne le domaine de la téléphonie et en particulier des réseaux de téléphonie mobile de troisième génération (3G). Le domaine de la téléphonie mobile est en plein essor et les réseaux de téléphonie mobile de troisième génération offrent des services de plus en plus variés, avec une bande passante de l'ordre du mégaoctet par seconde.

Dans les systèmes de téléphonie mobile de la génération du GSM (« Global System for Mobile communication », selon la terminologie anglaise), les données transmises par fréquences radio sont organisées selon des trames de données divisées en une pluralité d'intervalles de temps permettant à autant d'utilisateurs d'utiliser une même fréquence pour leur communication grâce à leur terminal mobile communicant. Cette division des trames de données, appelée « accès multiple par division du temps » (« Time Division Multiple Access », TDMA, selon la terminologie anglaise), ne permet pas d'offrir des débits de transmission très importants.

Dans les systèmes de troisième génération, les données peuvent être transmises grâce à différents codes qui permettent à une pluralité de terminaux mobiles communicants d'utiliser une même fréquence radio mais avec des codes différents. Cette technologie est appelée « accès multiple par division du code » (« Code Division Multiple Access », CDMA, selon la terminologie anglaise). Les récents développements des réseaux de téléphonie de troisième génération peuvent utiliser les deux types de division des fréquences radio pour la transmission des données. Par exemple, les systèmes de type UMTS-HSDPA (pour l'anglais « Universal Mobile Telecommunications System - High Speed Downlink Packet Acess ») permettent de multiplexer les différents abonnés à la fois dans des intervalles de temps et par des codes différents.

En Europe, par exemple, les réseaux de téléphonie mobile de troisième génération (3G) utilisent la norme UMTS (« Universal Mobile Telecommunications System », selon la terminologie anglaise) définie par le standard 3GPP (« Third Generation Partnership Project », selon la terminologie anglaise). La technologie WCDMA (pour l'anglais « Wide-Band Code Division Multiple Access ») utilisée aujourd'hui en UMTS permet d'obtenir une bande passante de l'ordre du mégaoctet par seconde. La version actuelle de l'UMTS, appelée R99 (« Release 99 », selon la terminologie anglaise) est peu à peu remplacée par le HSDPA (pour l'anglais « High Speed Downlink Packet Access ») permettant d'atteindre des bandes passantes élevées pour la transmission des données, au moins dans le sens descendant (« downlink », selon la terminologie anglaise), c'est-à-dire des émetteurs ou stations de base (BTS, « Base Transceiver Station », selon la terminologie anglaise) vers les terminaux mobiles communicants présents dans leur zone d'influence (communément appelée « cellule » ou « cell » en anglais). Ces nouvelles technologies de transmission permettent aux opérateurs d'offrir de nombreux services évolués tels que des services de visiophonie, de navigation Internet, de diffusion multimédia (« Multimédia Broadcast / Multicast Service », MBMS, selon la terminologie anglaise).

Un problème dans le domaine de la téléphonie mobile en général est la gestion des ressources radio (en anglais « Radio Resources Management », RRM) en fonction de la topologie des réseaux et de leur utilisation par les abonnés. La bonne exploitation des fréquences d'un réseau de téléphonie mobile nécessite en effet une gestion optimisée des ressources radio utilisées, aussi bien dans le sens montant que dans le sens descendant. Dans ces réseaux modernes, les débits de transmission au sein d'une cellule du réseau varient énormément et rapidement en fonction de l'utilisation des différents services par les utilisateurs. Il est donc important de permettre une gestion dynamique efficace du débit de données transitant par les stations de base (BTS, pour l'anglais « Base Transceiver Station ») pour les différents terminaux mobiles communicants présents dans leur zone d'influence et de surveiller la qualité des services fournis. De plus, avec le développement des nouvelles technologies utilisées dans les systèmes de troisième génération, les transmissions sont devenues asymétriques, c'est-à-dire que le flux descendant (« downlink », de la station de base vers les terminaux mobiles) est plus important que le flux montant (« uplink », des terminaux vers la station de base). Ainsi, par exemple, pour offrir des services de diffusion multimédia, il suffit en effet d'avoir de la bande passante libre sur le lien montant seulement. Un problème consiste alors à minimiser le coût et le spectre radioélectrique nécessaire à la mise en oeuvre de tels services asymétriques.

Il est connu dans l'art antérieur une solution pour augmenter la capacité des réseaux de téléphonie mobile WCDMA consistant à augmenter la puissance de la station de base (BTS). Cependant, cette solution présente les inconvénients de ne pas permettre de n'augmenter la capacité que dans le sens descendant, tandis que l'augmentation des interférences limite alors l'accroissement de la capacité. Il est connu dans l'art antérieur, notamment par la demande WO 2006/033603 A, des méthodes d'évaluation ou de dimensionnement de réseaux radio de type CDMA, consistant à définir mathématiquement un modèle de réseaux radio comportant au moins une station de base et une pluralité dé terminaux mobiles, puis à définir une valeur de gain pour un canal de transmission entre chacun de ces terminaux et la station de base, de façon à sélectionner une ensemble de données comprenant au moins un paramètre basé sur cette valeur de gain et calculer un dimensionnement sur cet ensemble de données. Le dimensionnement ainsi calculé permet d'estimer le nombre de stations de base nécessaires à l'écoulement du trafic au sein du réseau. Ce type de méthode permet d'estimer la qualité des services au sein de cellules du réseau et d'augmenter ou diminuer leurs tailles en fonction de la qualité des services ainsi évaluée grâce aux résultats de calculs effectués. Ce type de solution ne concerne pas l'ajout de services asymétriques et présente en outre les inconvénients de ne pas cibler spécifiquement la qualité de chacun des services et de ne pas cibler précisément les cellules au sein desquelles des services supplémentaires peuvent être ajoutés. Il est connu également dans l'art antérieur une solution consistant à utiliser des fréquences supplémentaires (une porteuse ou « carrier » selon la terminologie anglaise). Cependant, l'ajout d'une porteuse n'est pas toujours possible à cause de la rareté des fréquences disponibles et cette solution trop coûteuse ne permet pas non plus de n'augmenter la capacité que dans le sens descendant. Enfin, il est connu dans l'art antérieur des solutions permettant d'augmenter la capacité des réseaux de téléphonie grâce à une diversité de réception ou une diversité d'émission. La diversité de réception consiste à équiper les terminaux mobiles communicants avec une seconde antenne recueillant, comme la première antenne, le signal émis par les stations de base. Le terminal mobile communicant reconstitue alors le signal grâce à une corrélation des signaux reçus par ses deux antennes et, de ce fait, la puissance d'émission de la station de base peut être réduite, ce qui permet d'augmenter d'autant la capacité du réseau. Cependant, cette solution n'est pas une solution adaptée pour les services de diffusion vers plusieurs mobiles car elle dépend du parc de terminaux mobiles. C'est le moins performant des terminaux qui fixe la puissance nécessaire à la diffusion de l'information sur la zone. Cette solution n'est donc pas contrôlable par les opérateurs de téléphonie mobile. La diversité d'émission consiste en ce que les stations de base émettent leur signal sur une voie supplémentaire de transmission et en ce que les terminaux mobiles reçoivent alors deux instances du même signal, ce qui leur permet de reconstruire plus facilement ledit signal. La puissance nécessaire à la station de base peut alors être réduite, ce qui permet d'augmenter la capacité du réseau. Cependant, cette solution reste coûteuse car elle nécessite l'ajout d'une voie de transmission sur les stations de base. Il est donc nécessaire de prévoir en détail quelles sont les stations de base sur lesquelles la diversité d'émission doit être installée, de façon à minimiser le coût.

Dans ce contexte, il est intéressant de proposer une solution permettant d'optimiser la capacité des réseaux de téléphonie mobile en ciblant précisément les stations de base sur lesquelles une diversité d'émission doit être rajoutée pour permettre la création de services descendants.

La présente invention a pour but de supprimer les inconvénients de l'art antérieur en proposant un procédé d'optimisation de la capacité des réseaux de téléphonie pour la création de services descendants permettant de gérer la répartition du trafic et de déterminer les stations de base sur lesquelles une diversité d'émission doit être installée, à partir d'estimations du trafic et en fonction du nombre de canaux descendants que l'on souhaite ajouter au réseau.

Ce but est atteint par un procédé d'optimisation de la capacité d'au moins un réseau de téléphonie mobile de type WCDMA pour la création, grâce à l'installation d'une diversité d'émission au sein du réseau, d'au moins un service supplémentaire dont le flux est majoritairement descendant, le réseau comportant une pluralité d'émetteurs/récepteurs, dits stations de base, établissant des communications avec les terminaux mobiles communicants présents dans leur champ d'influence, dit cellule, l'ensemble de ces cellules définissant la zone de couverture du réseau, le procédé étant caractérisé en ce qu'il comporte les étapes suivantes mises en oeuvre par au moins un système informatique, dit simulateur, comportant des moyens de mémorisation stockant au moins un algorithme contrôlant les opérations effectuées par des moyens de traitement de données du simulateur :

- création, par les moyens de traitement de données du simulateur, de données représentatives de prévisions de la couverture du réseau et de la puissance nécessaire à l'utilisation des services par les détenteurs de terminaux mobiles communicants présents dans la zone de couverture du réseau, ces données étant générées pour au moins une date de déploiement planifié du réseau et regroupées sous la forme d'au moins une carte pour chaque date, dite carte du trafic planifié, stockée dans les moyens de mémorisation du simulateur ;
- calcul de la puissance disponible dans chacune des cellules du réseau en absence de diversité d'émission puis calcul de la puissance disponible dans chacune des cellules du réseau en présence de diversité d'émission, ces deux calculs, effectués par les moyens de traitement de données du simulateur, dépendant des fréquences, dites porteuses, sur lesquelles reposent les transmissions de données au sein du réseau et leurs résultats étant stockés dans les moyens de mémorisation du simulateur ;
- création, par les moyens de traitement de données du simulateur, d'au moins une liste des cellules nécessitant l'installation d'une diversité d'émission, en fonction d'au moins un nombre de canaux de transmission souhaité pour le service dont le flux est majoritairement descendant, cette liste étant stockée dans les moyens de mémorisation du simulateur.

Selon une autre particularité, les étapes du procédé sont mises en oeuvre en prévision du déploiement du réseau pour une pluralité de dates de déploiement planifié du réseau et itérées pour chacune de ces dates.

Selon une autre particularité, l'étape de création d'au moins une carte de trafic planifié comporte une étape de calcul, par les moyens de traitement de données du simulateur, d'un niveau d'atténuation du signal dans chacune des cellules du réseau, estimé à partir de données altimétriques et géographiques associées à chacune des stations de base du réseau et stockées dans les moyens de mémorisation du simulateur, cette étape résultant en la création de données représentatives de niveaux d'atténuation attendus en chaque point de chacune des cellules du réseau, stockées dans les moyens de mémorisation du simulateur.

Selon une autre particularité, l'étape de création d'au moins une carte de trafic planifié comporte une étape de calcul, par les moyens de traitement de données du simulateur, de la probabilité qu'un terminal mobile communicant présent dans la zone de couverture du réseau puisse établir une communication avec au moins une station de base, pour chacun des différents services offerts au sein du réseau et pour chacune des cellules du réseau, cette probabilité d'accès des terminaux aux services dépendant d'un niveau de réception attendu en chaque point de chacune des cellules du réseau, ce niveau de réception attendu correspondant à la puissance maximale des stations de base pondérée par les niveaux d'atténuation attendus en chaque point de chacune des cellules du réseau, la valeur de la puissance maximale des stations de base étant stockée dans les moyens de mémorisation du simulateur et combinée avec les données représentatives des niveaux d'atténuation attendus en chaque point de chacune des cellules du réseau pour générer, dans ces moyens de mémorisation, des données représentatives des niveaux de réception attendus en chaque point de chacune des cellules du réseau.

Selon une autre particularité, l'étape de calcul de la probabilité d'accès d'un terminal mobile communicant aux différents services offerts au sein du réseau comporte une étape de comparaison des niveaux de réception attendus en chaque point de chacune des cellules du réseau avec un seuil minimum de sensibilité pour l'établissement d'une communication entre une station de base et un terminal mobile communicant, pour le service considéré, la valeur standard de ce seuil minimum de sensibilité étant stockée dans les moyens de mémorisation du simulateur, cette probabilité qu'un terminal mobile communicant établisse une communication avec une station de base dépendant de la différence entre le niveau de réception attendu au point où il se trouve dans la cellule de cette station de base par rapport à ce seuil minimum de sensibilité.

Selon une autre particularité, l'étape de calcul de la probabilité d'accès des terminaux mobiles communicants aux différents services offerts au sein du réseau prend en compte la possibilité qu'un terminal mobile communicant puisse établir une communication simultanée, dite soft hand-over, avec plusieurs stations de base en même temps, grâce à une étape de comparaison, pour les points appartenant à au moins deux cellules du réseau à la fois, de la différence entre les niveaux de réception attendus en ces points par rapport aux stations de base de ces cellules auxquelles ils appartiennent avec un seuil minimum de recouvrement.

Selon une autre particularité, l'étape de création d'au moins une carte de trafic planifié comporte une étape de calcul, par les moyens de traitement de données du simulateur, de la puissance d'émission nécessaire dans les stations de base pour écouler le trafic planifié au sein du réseau, c'est-à-dire de la puissance nécessaire à l'utilisation des services par les détenteurs de terminaux mobiles communicants présents dans la zone de couverture du réseau, cette étape consistant en un calcul de la somme des puissances en chacun des points où la probabilité d'accès aux services est non nulle dans chacune des cellules du réseau, pondérée par un poids attribué au trafic en chacun des points, à partir d'une carte de trafic effectif, stockée dans les moyens de mémorisation du simulateur et comportant des données représentatives d'un trafic effectif mesuré préalablement lors d'un déploiement antérieur du réseau, le poids attribué aux différents points de chacune des cellules étant pondéré par un coefficient de progression du trafic, stocké également dans les moyens de mémorisation du simulateur et estimé d'après des prévisions sur l'évolution du trafic, la somme des puissances en chacun des points où la probabilité d'accès aux services est non nulle étant calculée d'après les niveaux de réception attendus calculés lors de l'étape de calcul de la probabilité d'accès des terminaux aux différents services.

Selon une autre particularité, l'étape de calcul de la puissance d'émission nécessaire pour écouler le trafic planifié comporte une étape supplémentaire de multiplication de la somme des puissances en chacun des points où la probabilité d'accès aux services est non nulle par un coefficient de réduction de puissance en fonction de l'efficacité des technologies sur lesquelles reposent les différents services offerts au sein du réseau, ce coefficient de réduction de puissance étant stocké dans les moyens de mémorisation du simulateur et permettant de pondérer la puissance estimée lors de l'étape de calcul de la puissance d'émission nécessaire pour écouler le trafic planifié.

Selon une autre particularité, le coefficient de réduction de puissance en fonction de l'efficacité des technologies sur lesquelles reposent les différents services offerts au sein du réseau est stocké dans les moyens de mémorisation du simulateur en relation avec les cartes de trafic planifié, les différentes cartes de trafic, correspondant à différentes dates de déploiement du réseau, pouvant être associées chacune à un coefficient de réduction de puissance différent pour prendre en compte l'évolution de l'efficacité des services due à l'évolution du parc des terminaux mobiles communicants et des technologies de transmission au sein du réseau, le procédé comportant alors une étape de recherche du coefficient de réduction de puissance correspondant à la date de déploiement à laquelle correspond la carte de trafic planifié en cours d'utilisation par les moyens de traitement du simulateur.

Selon une autre particularité, l'étape de calcul de la puissance disponible dans chacune des cellules du réseau en absence de diversité d'émission comporte une étape de calcul du nombre de porteuses nécessaires pour écouler le trafic planifié, suivie d'une étape de calcul de la puissance disponible après écoulement du trafic planifié, chacune des porteuses possédant une puissance nominale dont un pourcentage est consacré aux canaux de signalisation de cette porteuse et un pourcentage est utilisable pour écouler le trafic, l'étape de calcul du nombre de porteuses consistant, pour chaque cellule du réseau, en une division de la puissance totale nécessaire pour écouler le trafic par le pourcentage de la puissance nominale utilisable pour écouler le trafic, puis en un arrondi à l'entier supérieur du résultat de cette division, l'étape de calcul de la puissance disponible après écoulement du trafic planifié consistant, pour chaque cellule du réseau, en une multiplication du pourcentage de la puissance nominale utilisable pour écouler le trafic par ce nombre de porteuses ainsi calculé, puis en une soustraction du résultat de cette multiplication par la puissance totale nécessaire pour écouler le trafic.

Selon une autre particularité, l'étape de calcul de la puissance disponible dans chacune des cellules du réseau en présence de diversité d'émission comporte une étape d'estimation, par les moyens de traitement du simulateur, du gain apporté par l'ajout de diversité d'émission pour chacun des canaux de transmission au sein du réseau, lors d'une reconfiguration des ressources du réseau selon au moins un algorithme de gestion des ressources, ce gain étant représenté, pour chacun des canaux supportant les différents services offerts au sein du réseau et pour les canaux de signalisation, par au moins un coefficient de réduction de puissance par ajout de diversité d'émission, stocké dans les moyens de mémorisation du simulateur, cette étape d'estimation du gain consistant en l'utilisation du coefficient de réduction de puissance par ajout de diversité d'émission correspondant à l'algorithme de gestion de ressources qui est (ou sera) utilisé pour installer la diversité d'émission au sein du réseau.

Selon une autre particularité, l'algorithme de gestion des ressources concentre la puissance disponible sur la première porteuse commune à chacune des stations de base afin d'y libérer ainsi le maximum de puissance pour accueillir le service supplémentaire dont le flux est majoritairement descendant et d'y installer la diversité d'émission.

Selon une autre particularité, d'une part, l'algorithme de gestion des ressources privilégie, sur la porteuse sur laquelle la diversité d'émission est installée, le type de service pour lequel le gain apporté par la diversité d'émission est le plus important et, d'autre part, l'étape de calcul de la puissance disponible dans chacune des cellules du réseau en présence de diversité d'émission comporte une étape de calcul de la différence entre le pourcentage de la puissance nominale de cette porteuse avec diversité d'émission utilisable pour écouler le trafic et la puissance consommée sur cette porteuse par ce service pour lequel le gain apporté par la diversité d'émission est le plus important.

Selon une autre particularité, l'étape de création d'une liste des cellules nécessitant l'installation d'une diversité d'émission comporte une étape de recherche de la puissance minimum disponible en présence de diversité d'émission dans l'ensemble des cellules du réseau, une étape de calcul de la puissance nécessaire à la mise en service d'au moins un nombre déterminé de canaux de transmission permettant la mise en oeuvre du service dont le flux est majoritairement descendant et une étape de recherche du nombre et de la liste des cellules dont la puissance disponible en absence de diversité d'émission est inférieure à la puissance nécessaire à la mise en service du nombre déterminé de canaux de transmission et nécessitant donc l'installation d'une diversité d'émission.

Selon une autre particularité, les étapes de calcul de la puissance nécessaire à la mise en service d'au moins un nombre déterminé de canaux de transmission et de recherche du nombre et de la liste des cellules nécessitant l'installation d'une diversité d'émission sont itérées un nombre de fois correspondant à un nombre maximum de canaux de transmission dédiés au service dont le flux est majoritairement descendant, les itérations successives étant réalisées pour un nombre de canaux croissant jusqu'à atteindre le nombre maximum de canaux, ce nombre de canaux maximum étant calculé grâce à l'étape de recherche de la puissance minimum disponible dans l'ensemble des cellules du réseau en présence de diversité d'émission.

Selon une autre particularité, le procédé comporte une étape de calcul du coût de la mise en service de chaque canal de transmission dédié au service dont le flux est majoritairement descendant, mise en oeuvre par les moyens de traitement de données du simulateur, grâce à la pluralité d'itérations de l'étape de création de la liste des cellules nécessitant une diversité d'émission, en fonction du nombre croissant de canaux.

D'autres particularités et avantages de la présente invention apparaîtront plus clairement à la lecture de la description ci-après, faite en référence aux dessins annexés, dans lesquels :

-    la figure 1 représente les principales étapes d'un mode de réalisation du procédé selon l'invention,
-    la figure 2 représente le détail d'un mode de réalisation de l'étape de création de carte de trafic planifié du procédé selon l'invention,
-    la figure 3 représente le détail d'un mode de réalisation de l'étape de calcul de la puissance disponible en présence de diversité d'émission du procédé selon l'invention,
-    la figure 4 représente le détail d'un mode de réalisation de l'étape de calcul de la puissance disponible en absence de diversité d'émission du procédé selon l'invention,
-    la figure 5 représente le détail d'un mode de réalisation de l'étape de création de la liste de cellules nécessitant une diversité d'émission du procédé selon l'invention,

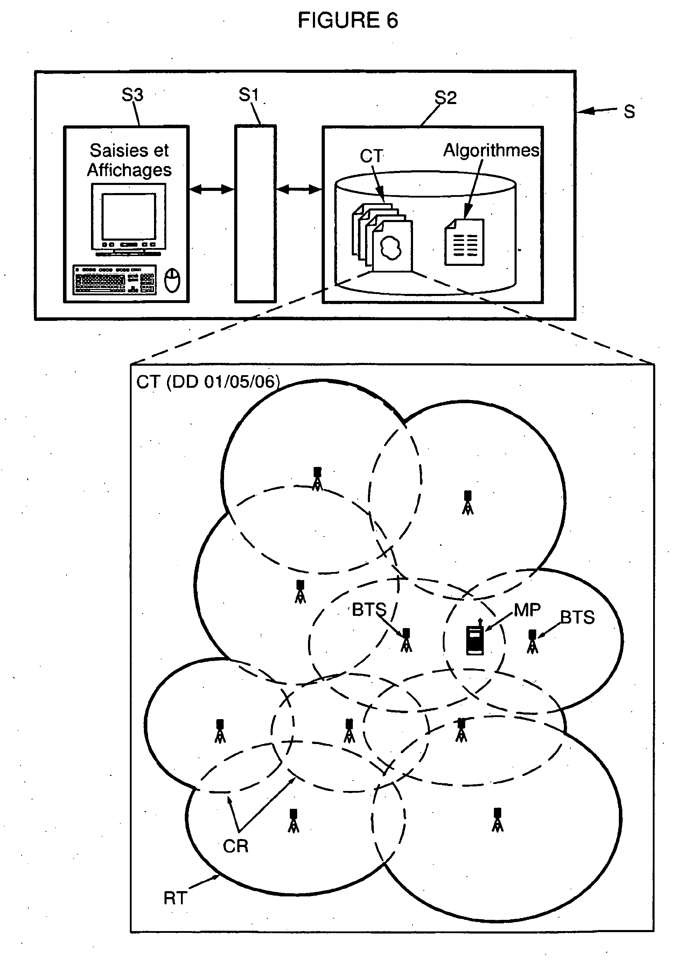

-    la figure 6 représente, d'une part, un mode de réalisation du simulateur permettant de mettre en oeuvre le procédé selon l'invention et, d'autre part, le détail d'une carte de trafic planifié selon un mode de réalisation de l'invention.

La présente invention concerne un procédé d'optimisation de la capacité d'au moins un réseau (RT) de téléphonie mobile pour la création d'au moins un service (MBMS) supplémentaire dont le flux est majoritairement descendant, grâce à l'installation d'une diversité d'émission au sein du réseau (RT). La présente invention est particulièrement adaptée aux réseaux de téléphonie mobile de troisième génération et notamment les réseaux supportés par la technologie WCDMA (« Wide-Band Code Division Multiple Access », selon la terminologie anglaise). Ainsi, l'invention vise en particulier l'optimisation des réseaux de téléphonie mobile répondant à la norme UMTS (« Universal Mobile Telecommunications System », selon la terminologie anglaise) définie par le standard 3GPP (« Third Generation Partnership Project », selon la terminologie anglaise). Cependant, la présente invention pourra s'appliquer également à d'autres types de réseaux pour autant que ces derniers soient supportés par une technologie de type CDMA (« Code Division Multiple Access »). La version actuelle de l'UMTS, appelée R99 (« Release 99 », selon la terminologie anglaise) est peu à peu complétée par le HSDPA (pour l'anglais « High Speed Downlink Packet Access ») permettant d'atteindre des bandes passantes élevées pour la transmission des données, au moins dans le sens descendant (« downlink », selon la terminologie anglaise), c'est-à-dire des émetteurs ou stations de base (BTS, « Base Transceiver Station », selon la terminologie anglaise) vers les terminaux (MP) mobiles communicants présents dans leur zone d'influence (communément appelée « cellule » ou « cell » en anglais).

Par le terme « service », on entend ici tout type de service fourni, grâce à une technologie donnée, par un fournisseur de services de téléphonie mobile, appelé ici « opérateur de téléphonie mobile ». Ainsi, on parlera de « service MBMS » pour désigner les services de diffusion multimédia grâce à la technologie MBMS ou de « service R99 » pour l'ensemble des services supportés par la version R99 de la norme UMTS ou encore de « service HSDPA » pour l'ensemble des services supportés par la version HSDPA de la norme UMTS. Les versions R99 et HSDPA permettent en fait aux opérateurs de téléphonie mobile de fournir divers types de services aux utilisateurs de terminaux mobiles communicants présents dans la zone d'influence des réseaux de téléphonie mobile de ces opérateurs. Ces différents services seront regroupés ici en fonction de la technologie par laquelle ils sont supportés. Ainsi, par exemple, des services de transmission de données vocales (appels téléphoniques classiques) ou de navigation Internet (qui peuvent aussi bien être supportés par la technologie R99 que la technologie HSDPA grâce en particulier aux fonctions de voix sur IP) seront regroupés ici sous le terme de service R99 ou service HSDPA selon le type de technologie utilisée pour un service donné.

Par l'expression « terminal mobile communicant », on entend ici tout type de terminal apte à établir des communications dans un réseau de téléphonie mobile répondant à la norme UMTS. Cette expression pourra donc, par exemple, désigner un téléphone mobile, mais également un ordinateur portable ou un assistant personnel digital (PDA, pour l'anglais « Personal Digital Assistant ») muni de moyens de communication par téléphonie mobile. Dans la terminologie propre à la norme UMTS, les stations de base (BTS) sont communément appelées « Node B », mais l'expression « station de base » (BTS) sera utilisée ici pour désigner ces dispositifs émetteurs/récepteurs qui établissent des communications avec les terminaux mobiles communicants présents dans leur champ d'influence. Par extension, l'expression « station de base » désignera ici l'ensemble de l'équipement de l'opérateur de téléphonie mobile permettant l'établissement de communications dans une cellule donnée du réseau. On entend donc ici par « station de base » l'ensemble des équipements électroniques (amplificateurs, antennes etc.) de l'opérateur dans une cellule donnée. Les réseaux de troisième génération permettent aux opérateurs d'offrir de nombreux services évolués tels que des services de visiophonie, de navigation Internet ou de diffusion multimédia comme le service MBMS (« Multimédia Broadcast / Multicast Service », selon la terminologie anglaise). Certains de ces services, comme par exemple la diffusion multimédia, possèdent un flux majoritairement descendant (Downlink). La puissance du flux descendant (communément appelée « puissance downlink ») nécessaire pour fournir ces services asymétriques ne laisse pas suffisamment de puissance aux autres services qui sont plus symétriques, ne permettant pas ainsi d'exploiter toute la capacité disponible sur le lien montant (uplink). Pour installer ce type de service asymétrique au sein d'un réseau de téléphonie mobile, il est donc souhaitable de libérer de la puissance downlink seulement, de façon à ne pas gaspiller de capacité uplink. Pour cela, il existe deux solutions qui ne sont pas incompatibles entre elles mais dont l'effet n'est pas intégralement cumulatif. Ces deux solutions consistent, pour les services symétriques et asymétriques, en l'ajout d'une « diversité de réception » dans les terminaux mobiles communicants et en l'ajout d'une « diversité d'émission » au niveau des stations de base (BTS).

La diversité de réception consiste à équiper les terminaux mobiles communicants avec une seconde antenne recueillant, comme la première antenne, le signal émis par les stations de base. Le terminal mobile communicant reconstitue alors le signal grâce à une corrélation des signaux reçus par ses deux antennes et, de ce fait, la puissance d'émission de la station de base peut être réduite d'autant pour une même qualité de réception, ce qui permet d'augmenter la capacité du réseau. Cette solution est déjà envisagée pour améliorer les débits HSDPA et peut être étendue à l'ensemble des services. Cependant, l'augmentation de la capacité du réseau permise par cette solution dépend du parc de terminaux mobiles communicants et les opérateurs de téléphonie mobile peuvent donc difficilement savoir à l'avance le gain qui sera apporté par cette solution. La diversité d'émission consiste en ce que les stations de base émettent leur signal sur une voie supplémentaire de transmission et en ce que les terminaux mobiles recevant alors deux instances du même signal reconstruisent plus facilement le signal. La puissance nécessaire à la station de base peut alors être réduite, ce qui permet d'augmenter la capacité du réseau. Cette solution ne dépend pas du parc de terminaux mobiles communicants et peut être mise en oeuvre par les opérateurs de téléphonie mobile qui peuvent prévoir à l'avance les cellules dans lesquelles cette diversité d'émission doit être ajoutée pour augmenter la capacité du réseau. Cette diversité d'émission permet à l'opérateur de consacrer de la puissance dans son réseau pour créer un service dont le flux est majoritairement descendant, tel qu'un service MBMS par exemple. En revanche, si l'opérateur alloue une puissance trop importante au nouveau service, la qualité des autres sera diminuée et les procédures classiques de contrôle d'admission d'appel risquent d'engendrer le rejet d'un trop grand nombre d'appels. L'opérateur doit alors choisir la puissance qu'il souhaite allouer au nouveau service en fonction du taux d'appels rejetés qu'il souhaite voir être toléré au sein de son réseau et en fonction du débit souhaité pour le nouveau service. L'installation d'une diversité d'émission sur une station de base est donc soumise à un seuil de décision qui dépend de la progression du trafic au sein du réseau. Cependant, cette solution présente un coût non négligeable pour l'opérateur car elle implique d'installer dans les stations de base une voie d'émission supplémentaire. Cette voie supplémentaire nécessite une seconde voie d'amplification qui s'accompagne, de façon connue en soi, de l'ajout d'un duplexeur (filtre permettant de combiner la réception et l'émission sur un même câble) ou d'un feeder (câble coaxial reliant un node B à une antenne). Il est donc nécessaire d'estimer avec précision quelles sont les stations de base au sein du réseau qui nécessitent l'ajout d'une diversité d'émission, de façon à en minimiser le coût de mise en oeuvre. L'invention vise donc à optimiser la capacité du réseau de téléphonie dans le but de créer un nouveau service dont le flux est majoritairement descendant, grâce à l'ajout de diversité d'émission, en estimant avec précision les cellules dans lesquelles cette diversité d'émission doit être ajoutée. Le procédé selon l'invention est mis en oeuvre par au moins un système informatique, dit simulateur (S), comportant des moyens (S2) de mémorisation stockant au moins un algorithme contrôlant les opérations effectuées par des moyens (S1) de traitement de données du simulateur (S).

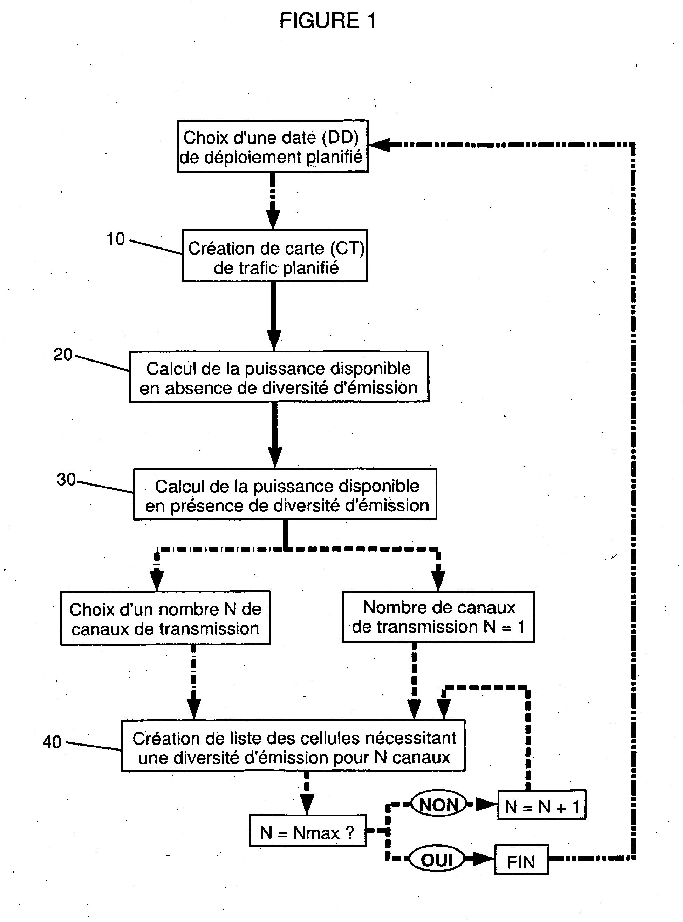

De façon connue en soi, on définit ici le réseau (RT) de téléphonie mobile d'après sa zone de couverture qui est constituée d'un ensemble de cellules (CR). Ces cellules correspondent chacune au champ d'influence d'une station de base (BTS). Ces stations de base (BTS) correspondent, comme mentionné précédemment, à des émetteurs/récepteurs établissant des communications avec les terminaux (MP) mobiles communicants présents dans leur champ d'influence. Le simulateur (S) permet de simuler la zone de couverture du réseau (RT) et d'estimer la puissance nécessaire dans les différentes cellules (CR). La simulation pourra être réalisée préalablement à un déploiement du réseau (RT). Ainsi, l'invention prévoit que la simulation concerne au moins une date (DD) de déploiement planifié du réseau (RT). Les opérateurs de téléphonie mobile prévoient en effet à l'avance à quelles dates ils vont mettre en place de nouvelles stations de base, de nouveaux services etc. Ainsi, la simulation pourra être effectuée pour une plusieurs dates (DD) de déploiement planifié. Le procédé pourra donc éventuellement comporter une étape de choix d'une date (DD) de déploiement. Au contraire, le procédé pourra être mis en oeuvre une seule fois mais avec plusieurs itérations successives, chaque itération concernant une date (DD) de déploiement donnée. Ainsi, les étapes du procédé pourront être mises en oeuvre en prévision du déploiement du réseau (RT) pour une pluralité de dates (DD) de déploiement planifié du réseau (RT) et itérées pour chacune de ces dates (DD). La figure 1, représentant les étapes principales du procédé selon un mode de réalisation de l'invention, fait apparaître cette possibilité de pluralité d'itérations par une flèche pointillée reliant la dernière étape à la première et symbolisant une répétition éventuelle de l'intégralité des étapes représentées sur la figure 1. On notera au passage que la figure 1 comporte plusieurs flèches en traits pleins et plusieurs flèches dont les pointillés ont des espacements différents. Les flèches possédant un pointillé dont l'espacement est différent représentent des options différentes de succession d'étapes dans le procédé, tandis que les flèches possédant un pointillé dont l'espacement est identique concerne une même option dans la succession d'étapes. Le simulateur (S) pourra naturellement comporter des moyens (S3) de saisie et d'affichage permettant à un utilisateur du simulateur (S) de visualiser et de saisir ses choix concernant notamment les dates (DD) de déploiement pour lesquelles il souhaite optimiser la capacité du réseau (RT). Afin d'optimiser la capacité du réseau (RT), la simulation doit naturellement prendre en compte les données relatives au trafic au sein du réseau (RT). Ainsi, le procédé démarre par une étape de création (10), par les moyens (S1) de traitement de données du simulateur (S), de données représentatives de prévisions de la couverture du réseau (RT) et de la puissance nécessaire à l'utilisation des services par les détenteurs de terminaux (MP) mobiles communicants présents dans la zone de couverture du réseau (RT). Comme mentionné précédemment, la simulation pourra concerner une ou plusieurs date(s) (DD) de déploiement du réseau (RT). Les données créées lors de cette étape (10) seront donc générées pour au moins une date (DD) de déploiement planifié du réseau (RT) et regroupées sous la forme d'au moins une carte pour chaque date (DD), dite carte (CT) du trafic planifié, stockée dans les moyens (S2) de mémorisation du simulateur (S).

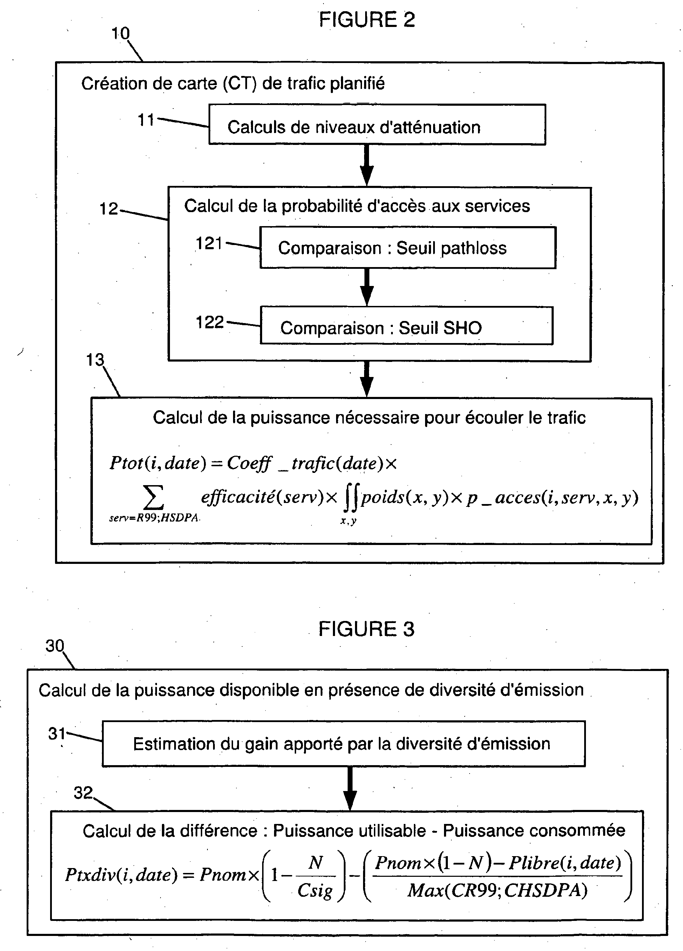

Comme particulièrement visible sur la figure 2, l'étape de création (10) d'au moins une carte (CT) de trafic planifié comporte une étape de calcul (11), par les moyens (S1) de traitement de données du simulateur (S), d'un niveau d'atténuation du signal dans chacune des cellules (CR) du réseau (RT). Ce niveau d'atténuation du signal est estimé par les moyens (S1) de traitement de données du simulateur (S), à partir de données altimétriques et géographiques associées à chacune des stations de base (BTS) du réseau (RT) et stockées dans les moyens (S2) de mémorisation du simulateur (S). Ce calcul (11) des niveaux d'atténuation de chacune des cellules (CR) résulte en la création de données représentatives de niveaux d'atténuation attendus en chaque point de chacune des cellules du réseau (RT). Le simulateur (S) stockera alors ces données dans ses moyens (S2) de mémorisation. Grâce à ces données, les moyens (S1) de traitement de données du simulateur (S) mettent alors en oeuvre une étape de calcul (12) de la probabilité qu'un terminal (MP) mobile communicant présent dans la zone de couverture du réseau (RT) puisse établir une communication avec au moins une station de base (BTS). Cette étape consiste en un calcul d'une probabilité d'accès des terminaux (MP) à chacun des différents services offerts au sein du réseau (RT) et pour chacune des cellules (CR) du réseau (RT). Cette probabilité d'accès des terminaux (MP) aux services dépend naturellement du niveau de réception attendu en chaque point de chacune des cellules du réseau (RT). Ce niveau de réception attendu correspond à la puissance maximale des stations de base (BTS) pondérée par les niveaux d'atténuation attendus calculés à l'étape (11) précédente. La valeur de la puissance maximale des stations de base (BTS) est connue à l'avance et stockée dans les moyens (S2) de mémorisation du simulateur (S) pour être combinée avec les données représentatives des niveaux d'atténuation attendus en chaque point de chacune des cellules du réseau (RT) et générer, dans ces moyens (S2) de mémorisation, dès données représentatives des niveaux de réception attendus en chaque point de chacune des cellules du réseau (RT).

Grâce à ces niveaux de réception attendus, les moyens (S1) de traitement de données du simulateur (S) peuvent alors calculer la probabilité d'accès des terminaux aux différents services, par exemple d'après un algorithme stocké dans les moyens (S2) de mémorisation du simulateur (S). Par exemple, dans un mode de réalisation de cette étape de calcul (12) de la probabilité d'accès d'un terminal (MP) mobile communicant aux différents services offerts au sein du réseau (RT), la probabilité sera calculée en fonction d'un seuil de sensibilité des terminaux (MP) mobiles communicants pour le service considéré. Dans les réseaux de téléphonie, l'atténuation du signal entre les stations de base (BTS) et les terminaux (MP) mobiles communicants est communément appelée perte de propagation des ondes ou « pathloss »en anglais. En fonction de la perte de propagation (atténuation ou pathloss) subie par le signal, les terminaux (MP) mobiles communicants présents dans une cellules (CR) donnée requièrent un ajustement de la puissance émise par la station de base (BTS) pour que le niveau de puissance reçu dépasse le seuil de sensibilité des terminaux (MP) mobiles communicants pour le service considéré, dans la limite de la puissance maximale de la station de base. Ce seuil est appelé ici « seuil pathloss » car la communication sera possible dés lors que la différence entre la puissance émise et la perte de propagation (pathloss) reste supérieure ou égale à la sensibilité du terminal (MP) mobile communicant pour le service considéré. Un tel seuil est considéré comme la valeur minimum de puissance en dessous de laquelle il n'est pas raisonnable de considérer qu'un terminal mobile communicant puisse établir une communication suffisamment fiable avec la station de base à cause de la valeur de puissance maximale émise par la station de base (BTS) et de la perte de propagation subie par le signal. Dans ce mode de réalisation, le procédé comporte alors une étape de comparaison (121) des niveaux de réception attendus en chaque point de chacune des cellules du réseau (RT) avec un seuil (seuil pathloss) minimum de sensibilité pour l'établissement d'une communication entre une station de base (BTS) et un terminal (MP) mobile communicant, pour le service considéré. La valeur standard utilisée pour ce seuil (seuil pathloss) minimum de sensibilité pourra être stockée dans les moyens (S2) de mémorisation du simulateur (S), ou bien être choisie par l'utilisateur du simulateur (S), grâce aux moyens (S3) de saisie et d'affichage. Cette étape de calcul permet de prendre en compte du fait que la probabilité qu'un terminal (MP) mobile communicant établisse une communication avec une station de base (BTS) dépend de la différence entre le niveau de réception attendu au point où il se trouve dans la cellule (CR) de cette station (BTS) de base par rapport à ce seuil (seuil pathloss) minimum de sensibilité. Dans un mode de réalisation, cette probabilité sera calculée selon une loi « tout ou rien », c'est-à-dire que si la valeur du niveau de réception attendu est supérieure au seuil minimum de sensibilité (seuil pathloss), la probabilité sera estimée comme étant de 100% alors que si la valeur du niveau de réception attendu est inférieure au seuil minimum de sensibilité (seuil pathloss), la probabilité sera estimée comme étant de 0%. Dans un autre mode de réalisation de cette étape de calcul (12) de la probabilité d'accès, la probabilité d'accès pourra être représentée par une fonction proportionnelle à la différence entre le niveau de réception et le seuil minimum de sensibilité (seuil pathloss).

Pour les services de type R99 de la norme UMTS, un même terminal (MP) mobile communicant peut être attaché simultanément sur deux stations de base (BTS) à la fois. Cet attachement simultané est connu sous le terme « Soft Hand-Over » qui est hérité des technologies antérieures dans lesquelles un terminal (MP) mobile communicant se trouvant dans une zone géographique où au moins deux cellules se recouvrent partiellement pouvait établir une communication avec l'une ou l'autre des stations de base (BTS) et le terminal pouvait alors basculer (« hand-over ») d'une station à l'autre en fonction du niveau de réception. Dans un mode de réalisation de l'étape de calcul (12) de la probabilité d'accès des terminaux (MP) mobiles communicants aux différents services offerts au sein du réseau (RT), cette possibilité de communication simultanée, dite soft hand-over (SHO), avec plusieurs stations de base (BTS) est prise en compte. Dans ce mode de réalisation, l'étape de calcul (12) de la probabilité d'accès comporte une étape de comparaison (122), pour les points appartenant à au moins deux cellules (CR) du réseau (RT) à la fois, de la différence entre les niveaux de réception attendus en ces points par rapport aux stations de base (BTS) de ces cellules (CR) auxquelles ils appartiennent avec un seuil minimum de recouvrement (seuil SHO). Ainsi, pour les services de type R99, on considèrera qu'un terminal (MP) mobile communicant a 100% de probabilité d'être attaché sur (d'établir une communication avec) une station de base (BTS) pour laquelle le niveau de réception est supérieur au seuil minimum de sensibilité (seuil pathloss), mais a également 100% de probabilité d'être aussi attaché sur une deuxième station de base (BTS) pour laquelle le niveau de réception est supérieur au seuil minimum (seuil pathloss) de sensibilité et si la différence entre le niveau de réception attendu pour la première station de base et le niveau de réception attendu pour la seconde station de base est inférieure au seuil minimum de recouvrement (seuil SHO). De même, un terminal (MP) peut établir des communications avec trois stations de base simultanément. Ce terminal sera alors considéré comme ayant également une probabilité de 100% d'être attaché sur une troisième station de base (BTS) pour laquelle le niveau de réception est supérieur au seuil minimum (seuil pathloss) de sensibilité et si la différence entre le niveau de réception attendu pour la première station de base et le niveau de réception attendu pour cette troisième station de base est inférieure au seuil minimum de recouvrement (seuil SHO). Cette étape permettra naturellement de considérer la probabilité d'accès aux services pour autant de stations de base (BTS) que possible. En revanche, pour le service HSDPA, il n'existe pas de « soft hand-over » et un terminal aura donc une probabilité de 100% d'établir une communication avec une station de base (BTS) si le niveau de réception est supérieur au seuil minimum (seuil pathloss) de sensibilité du terminal pour le service HSDPA, pour cette station de base, mais une probabilité de 0% si le niveau de réception est inférieur au seuil minimum (seuil pathloss) de sensibilité. Enfin, pour compléter les données des cartes de trafic planifié, l'étape de création (10) d'au moins une carte (CT) de trafic planifié pourra comporter une étape de calcul (13), par les moyens (S1) de traitement de données du simulateur (S), de la puissance d'émission nécessaire dans les stations de base (BTS) pour écouler le trafic planifié au sein du réseau (RT). Cette puissance d'émission nécessaire pour écouler le trafic correspond à la puissance nécessaire à l'utilisation des services par les détenteurs de terminaux (MP) mobiles communicants présents dans la zone de couverture du réseau (RT). Cette étape (13) consiste globalement en un calcul de la somme des puissances en chacun des points où la probabilité d'accès aux services est non nulle dans chacune des cellules (CR) du réseau (RT). Cette somme des puissances en chacun des points où la probabilité d'accès aux services est non nulle sera naturellement calculée d'après les niveaux de réception attendus, calculés lors de l'étape de calcul (12) de la probabilité d'accès des terminaux aux différents services. Cependant, l'utilisation des services par les détenteurs de terminaux (MP) mobiles communicants n'est pas uniforme en tous les points du réseau (RT). Cette somme des puissances sera donc pondérée par un poids attribué au trafic en chacun des points. Ce poids du trafic sera attribué à partir d'une carte (CTe) de trafic effectif, stockée dans les moyens (S2) de mémorisation du simulateur et comportant des données représentatives d'un trafic effectif mesuré préalablement lors d'un déploiement antérieur du réseau (RT). De même, le trafic évolue au cours du temps en fonction des types de terminaux (MP) mobiles communicants et des désirs de leurs utilisateurs. Le poids attribué aux différents points de chacune des cellules (CR) sera alors pondéré par un coefficient de progression du trafic, stocké également dans les moyens (S2) de mémorisation du simulateur et estimé d'après des prévisions sur l'évolution du trafic. Enfin, les différents services ne possèdent pas la même efficacité en fonction de la technologie sur laquelle ils reposent. Certains services ont donc une meilleure efficacité et nécessitent donc moins de puissance que d'autre pour fonctionner. Par conséquent, l'étape de calcul (13) de la puissance d'émission nécessaire pour écouler le trafic planifié pourra, dans un mode de réalisation, comporter une étape supplémentaire de multiplication de la somme des puissances en chacun des points où la probabilité d'accès aux services est non nulle par un coefficient de réduction de puissance en fonction de l'efficacité des technologies sur lesquelles reposent les différents services offerts au sein du réseau (RT). Ce coefficient de réduction de puissance sera naturellement stocké dans les moyens (S2) de mémorisation du simulateur (S) et permettra de pondérer la puissance estimée lors de l'étape de calcul (13) de la puissance d'émission nécessaire pour écouler le trafic planifié. Ainsi, la puissance d'émission, notée Ptot(i, date), nécessaire pour écouler le trafic planifié, dans une cellule (CR) donnée (notée i) et à une date (DD) de déploiement donnée (notée date), sera calculée selon l'équation suivante :

$$Ptot(i, date) = Coeff\_trafic(date) \times \sum_{serv=R99;HSDPA} efficacité(serv) \times \iint_{x,y} poids(x,y) \times p\_acces(i,serv,x,y)$$

« p_acces(i,serv,x,y) » désignant la probabilité d'accès à un service (serv) donné, en un point de coordonnées (x,y) données, dans une cellule (i) donnée ;

« poids(x,y) » désignant le poids du trafic attribué à chaque point de coordonnées (x,y) de chaque cellule (i) ;

« Coeff_trafic (date) » désignant le coefficient de progression du trafic par rapport à la carte (Cte) de trafic de référence ;

« efficacité(serv) » désignant le coefficient de réduction de puissance en fonction de l'efficacité du service (serv), en l'occurrence R99 ou HSDPA.

Dans un mode de réalisation de l'étape de calcul (13) de la puissance d'émission nécessaire pour écouler le trafic planifié, différents coefficients de réduction de puissance en fonction de l'efficacité des technologies pourront être utilisés en fonction de la date (DD) de déploiement considérée. Ce coefficient de réduction de puissance en fonction de l'efficacité des technologies sur lesquelles reposent les différents services offerts au sein du réseau (RT) est stocké dans les moyens (S2) de mémorisation du simulateur (S) en relation avec les cartes de trafic planifié (CT). Ainsi, les différentes cartes de trafic (CT), correspondant à différentes dates (DD) de déploiement du réseau (RT), pourront être associées chacune à un coefficient de réduction de puissance différent pour prendre en compte l'évolution de l'efficacité des services due à l'évolution des terminaux mobiles communicants et des technologies de transmission au sein du réseau (RT). Dans ce mode de réalisation, le procédé comportera alors une étape de recherche du coefficient de réduction de puissance correspondant à la date (DD) de déploiement à laquelle correspond la carte de trafic planifié (CT) en cours d'utilisation par les moyens (S1) de traitement du simulateur (S).

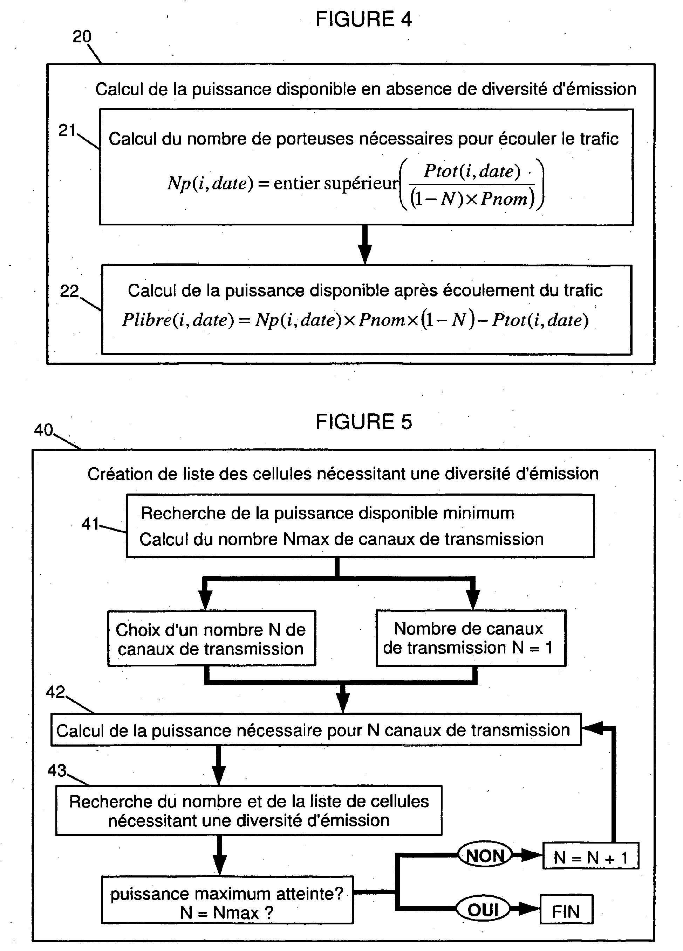

Une fois les cartes (CT) de trafic planifié créées par les moyens (S1) de traitement du simulateur (S), la puissance nécessaire à l'écoulement du trafic est connue pour chacune des cellules (CR) du réseau (RT). Le procédé se poursuit alors par une étape de calcul (20) de la puissance disponible dans chacune des cellules (CR) du réseau (RT) en absence de diversité d'émission, puis par une étape de calcul (30) de la puissance disponible dans chacune des cellules (CR) du réseau (RT) en présence de diversité d'émission. Ces deux calculs, effectués par les moyens (S1) de traitement de données du simulateur (S), dépendent des fréquences, dites porteuses, sur lesquelles reposent les transmissions de données au sein du réseau (RT) et leurs résultats sera stocké dans les moyens (S2) de mémorisation du simulateur (S) pour permettre la mise en oeuvre des étapes suivantes. Comme particulièrement visible sur la figure 4, l'étape de calcul (20) de la puissance disponible dans chacune des cellules (CR) du réseau (RT) en absence de diversité d'émission comporte une étape de calcul (21) du nombre de porteuses nécessaires pour écouler le trafic planifié, suivie d'une étape de calcul (22) de la puissance disponible après écoulement du trafic planifié. Dans les réseaux de téléphonie mobile, chacune des porteuses possèdent une puissance nominale dont un pourcentage est consacré aux canaux de signalisation de cette porteuse et un pourcentage est utilisable pour écouler le trafic. Les canaux de signalisation d'une porteuse d'une cellule (CR) donnée sont les canaux utilisés par l'ensemble des terminaux mobiles communicants présents dans cette cellule et leur permettant de se synchroniser sur la porteuse. Le procédé nécessite donc de connaître quel pourcentage de la puissance nominale des porteuses est consacré aux canaux de signalisation et donc quel pourcentage est utilisable pour écouler le trafic. L'une et/ou l'autre des valeurs de ces pourcentages pourra(pourront) être stockée(s) dans les moyens (S2) de mémorisation du simulateur (S) de façon à permettre le calcul (20) de la puissance disponible dans chacune des cellules (CR) du réseau (RT) en absence de diversité d'émission. L'étape de calcul (21) du nombre de porteuse consiste, pour chaque cellule (CR) du réseau (RT), en une division de la puissance totale nécessaire pour écouler le trafic par le pourcentage de la puissance nominale utilisable pour écouler le trafic, puis en un arrondi à l'entier supérieur du résultat de cette division. Le nombre de porteuses, noté Np(i,date), nécessaire pour écouler le trafic, dans une cellule (CR) donnée (notée i) et à une date (DD) de déploiement donnée (notée date), sera calculé selon l'équation suivante :

$$Np(i, date) = \text{entier supérieur}\left( \frac{Ptot(i, date)}{(1-N) \times Pnom} \right)$$

Pnom désignant la puissance nominale de la porteuse ;

N désignant le pourcentage de la puissance nominale consacré à la signalisation des porteuses et (1-N) désignant naturellement le pourcentage utilisable pour écouler le trafic ;

Ptot(i,date) désignant la puissance nécessaire pour écouler le trafic, dans une cellule (CR) donnée (notée i) et à une date (DD) de déploiement donnée (notée date), calculée lors de l'étape de calcul (13) de la puissance d'émission nécessaire pour écouler le trafic planifié.

Cette étape de calcul (21) du nombre de porteuses nécessaires pour écouler le trafic planifié permet donc de connaître le nombre de porteuses qui doit être utilisé pour écouler le trafic et, en connaissant la puissance totale nécessaire pour écouler le trafic, de déduire ainsi la puissance qui reste disponible une fois que le trafic est écoulé par ce nombre de porteuses. L'étape de calcul (22) de la puissance disponible après écoulement du trafic planifié consiste alors, pour chaque cellule (CR) du réseau (RT), en une multiplication du pourcentage de la puissance nominale utilisable pour écouler le trafic par ce nombre de porteuses ainsi calculé, puis en une soustraction du résultat de cette multiplication par la puissance totale nécessaire pour écouler le trafic. La puissance disponible, notée Plibre(i,date), après écoulement du trafic planifié, dans une cellule (CR) donnée (notée i) et à une date (DD) de déploiement donnée (notée date), sera donc calculée selon l'équation suivante :

$$Plibre(i, date) = Np(i, date) \times Pnom \times (1-N) - Ptot(i, date)$$

Pnom désignant la puissance nominale de la porteuse ;

N désignant le pourcentage de la puissance nominale consacré à la signalisation des porteuses et (1-N) désignant naturellement le pourcentage utilisable pour écouler le trafic ;

Ptot(i,date) désignant la puissance nécessaire pour écouler le trafic, dans une cellule (CR) donnée (notée i) et à une date (DD) de déploiement donnée (notée date), calculée lors de l'étape de calcul (13) de la puissance d'émission nécessaire pour écouler le trafic planifié.

Ces deux étapes (21, 22) de calcul permettent donc de connaître quelle sera la puissance qui restera utilisable dans chacune des cellules (CR) du réseau (RT), une fois le trafic planifié écouler par les porteuses, pour pouvoir créer un service supplémentaire, sans avoir ajouté de diversité d'émission. Le procédé se poursuit alors par un calcul de la puissance qui sera utilisable une fois que cette diversité d'émission aura été ajoutée sur au moins une des porteuses utilisables au sein du réseau (RT). Comme particulièrement visible sur la figure 3, l'étape de calcul (30) de la puissance disponible dans chacune des cellules (CR) du réseau (RT) en présence de diversité d'émission comporte une étape d'estimation (31), par les moyens (S1) de traitement du simulateur (S), du gain apporté par l'ajout de diversité d'émission pour chacun des canaux de transmission au sein du réseau (RT). Dans un mode de réalisation de l'invention, l'ajout de la diversité d'émission s'accompagne d'une reconfiguration des ressources du réseau (RT) selon au moins un algorithme (RRM) de gestion des ressources, par exemple stocké dans les moyens (S2) de mémorisation du simulateur (S). Cet ajout de diversité d'émission engendrera naturellement un certain gain pour les canaux de signalisation, un certain gain pour les canaux de transmission du service R99 et un certain gain pour les canaux de transmission du service HSDPA. Ainsi, le gain apporté par l'ajout de diversité d'émission pourra être représenté par au moins un coefficient de réduction de puissance par ajout de diversité d'émission, stocké dans les moyens (S2) de mémorisation du simulateur (S), pour chacun des canaux supportant les différents services offerts (R99 et HSDPA, en l'occurrence) au sein du réseau (RT) et pour les canaux de signalisation. Lors de la reconfiguration des ressources selon un algorithme (RRM) de gestion de ressources, cette étape d'estimation (31) du gain consistera en l'utilisation du coefficient de réduction de puissance par ajout de diversité d'émission correspondant à l'algorithme (RRM) de gestion de ressources qui est utilisé pour installer la diversité d'émission au sein du réseau (RT). Dans un mode de réalisation, l'algorithme (RRM) de gestion des ressources concentre la puissance disponible sur la première porteuse commune à chacune des stations de base (BTS) afin d'y libérer ainsi le maximum de puissance pour accueillir le service (MBMS) supplémentaire dont le flux est majoritairement descendant et d'y installer la diversité d'émission. On entend ici par première porteuse celle qui est commune à l'ensemble des stations de base de la couche principale du réseau. Ainsi, le nouveau service (MBMS) pourra être installé sur cette première porteuse et pourra profiter de la macro diversité, c'est-à-dire que les terminaux (MP) mobiles communicants pourront recevoir les canaux MBMS de plusieurs stations de base (BTS) en même temps puisque la première porteuse est toujours présente sur n'importe quelle station de base (BTS), ce qui n'est pas forcément le cas pour les porteuses supplémentaires. La puissance nécessaire à la diffusion de chacun des canaux MBMS pourra être moins importante qu'en absence de macro diversité, augmentant ainsi le nombre de canaux MBMS possible, et cette configuration permettra d'avoir le même nombre de canaux MBMS dans toutes les cellules (CR) du réseau (RT) afin de garantir la continuité du service de diffusion sur le réseau. Dans un mode de réalisation du procédé, l'algorithme (RRM) de gestion des ressources utilisé pour cette reconfiguration des ressources privilégiera, sur la porteuse sur laquelle la diversité d'émission est installée, le type de service pour lequel le gain apporté par la diversité d'émission sera le plus important. En effet, comme mentionné précédemment, le gain apporté par la diversité d'émission dépend du type de service et il est avantageux que l'algorithme (RRM) de gestion des ressources permette d'obtenir un gain le plus important possible. Cette étape de calcul (30) de la puissance disponible dans chacune des cellules (CR) du réseau (RT) en présence de diversité d'émission comporte une étape (32) de calcul de la différence entre le pourcentage de la puissance nominale de cette porteuse avec diversité d'émission utilisable pour écouler le trafic et la puissance consommée sur cette porteuse par ce service pour lequel le gain apporté par la diversité d'émission est le plus important. Ainsi la puissance disponible en présence de diversité d'émission, notée Ptxdiv(i,date), dans une cellule (CR) donnée (notée i) et à une date (DD) de déploiement donnée (notée date), sera calculée selon l'équation suivante :

$$Ptxdiv(i, date) = Pnom \times \left(1 - \frac{N}{Csig}\right) - \left(\frac{Pnom \times (1 - N) - Plibre(i, date)}{Max(CR99; CHSDPA)}\right)$$

Csig désignant le gain ou coefficient de réduction de puissance apporté aux canaux de signalisation par l'ajout de diversité ;

CR99 désignant le gain ou coefficient de réduction de puissance apporté aux canaux du service R99 par l'ajout de diversité ;

CHSDPA désignant le gain ou coefficient de réduction de puissance apporté aux canaux du service HSDPA par l'ajout de diversité ;

Max désignant le fait que l'algorithme (RRM) de gestion de ressources sera programmé pour privilégier le service pour lequel le gain apporté est le plus grand ;

Pnom désignant la puissance nominale de la porteuse;

N désignant le pourcentage de la puissance nominale consacré à la signalisation des porteuses et (1-N) désignant naturellement le pourcentage utilisable pour écouler le trafic ;

Plibre(i,date) désignant la puissance disponible après écoulement du trafic planifié, dans une cellule (CR) donnée (notée i) et à une date (DD) de déploiement donnée (notée date), calculée lors de l'étape de calcul (22) de la puissance disponible après écoulement du trafic planifié.

Les étapes précédentes ont permis aux moyens (S1) de traitement de données du simulateur (S) de déterminer, pour chacune des stations de base (BTS) du réseau (RT) et pour chacune des dates (DD) de déploiement planifié, quelle puissance serait disponible, en absence et en présence de diversité d'émission, pour créer un nouveau service (MBMS) dont le flux est majoritairement descendant. Cette étape permet alors la création (40), par les moyens (S1) de traitement de données du simulateur (S), d'au moins une liste des cellules (CR) nécessitant l'installation d'une diversité d'émission pour créer ce nouveau service (MBMS). Cette liste sera générée en fonction d'au moins un nombre (N) de canaux de transmission souhaité pour le service (MBMS) dont le flux est majoritairement descendant et sera stockée dans les moyens (S2) de mémorisation du simulateur (S). Cette étape (40) de création d'au moins une liste des cellules (CR) nécessitant l'installation d'une diversité d'émission comporte une étape de recherche (41) de la puissance minimum disponible en présence de diversité d'émission dans l'ensemble des cellules (CR) du réseau (RT). Cette étape (41) permet de déterminer quelle est la plus faible puissance qui peut être libérée dans l'ensemble des cellules (CR) du réseau (RT) lors de l'ajout de diversité d'émission. De plus, en connaissant la puissance requise par chacun des canaux de transmission du nouveau service (MBMS), cette étape (41) permet de déterminer quel est le nombre maximum (Nmax) de canaux que l'on pourra mettre en service au sein du réseau (RT). Dans un mode de réalisation, l'étape de création (40) de la liste des cellules nécessitant une diversité d'émission pourra comporter une étape de choix du nombre (N) de canaux souhaité pour le nouveau service (MBMS). L'utilisateur pourra par exemple saisir ce nombre (N) de canaux qu'il souhaite créer pour le nouveau service sur les moyens (S3) de saisie et d'affichage du simulateur (S). Dans un autre mode de réalisation, le simulateur effectuera une pluralité d'itérations de cette étape de création (40) pour un nombre (N) croissant de canaux de transmission, jusqu'à atteindre le nombre maximum (Nmax) de canaux déterminé grâce à l'étape de recherche (41) de la puissance minimum disponible en présence de diversité d'émission dans l'ensemble des cellules (CR) du réseau (RT). Comme particulièrement visible sur la figure 1, le procédé pourra donc soit suivre une première succession d'étapes avec une seule itération de la création (40) de la liste des cellules nécessitant une diversité d'émission pour créer un nouveau service comportant un nombre (N) de canaux choisi lors d'une étape de choix (flèches pointillées de gauche), soit suivre une seconde succession d'étapes avec un nombre d'itérations correspondant au nombre maximum de canaux (Nmax), pour créer un nouveau service comportant un nombre (N) croissant de canaux jusqu'à atteindre le nombre maximum (Nmax) de canaux (flèches pointillées de droite rebouclant sur elles-mêmes jusqu'à ce que la puissance maximum soit atteinte). Comme particulièrement visible sur la figure 5, l'étape de création (40) d'une liste des cellules nécessitant l'installation d'une diversité d'émission comporte, outre l'étape de recherche (41) de la puissance minimum disponible en présence de diversité d'émission dans l'ensemble des cellules (CR) du réseau (RT), une étape de calcul (42) de la puissance nécessaire à la mise en service d'au moins un nombre (N) déterminé de canaux de transmission permettant la mise en oeuvre du service dont le flux est majoritairement descendant et une étape de recherche (43) du nombre et de la liste des cellules (CR) dont la puissance disponible en absence de diversité d'émission est inférieure à la puissance nécessaire à la mise en service du nombre (N) déterminé de canaux de transmission et nécessitant donc l'installation d'une diversité d'émission. Comme mentionné ci-dessus en référence à la figure 1, les étapes de calcul (42) de la puissance nécessaire à la mise en service d'au moins un nombre (N) déterminé de canaux de transmission et de recherche (43) du nombre et de la liste des cellules (CR) nécessitant l'installation d'une diversité d'émission pourront, dans un mode de réalisation, être itérées un nombre de fois correspondant à un nombre maximum (Nmax) de canaux de transmission dédiés au service (MBMS) dont le flux est majoritairement descendant, les itérations successives étant réalisées pour un nombre (N) de canaux croissant jusqu'à atteindre le nombre (Nmax) maximum de canaux, ce nombre (Nmax) de canaux maximum étant calculé grâce à l'étape de recherche (41) de la puissance minimum disponible dans l'ensemble des cellules (CR) du réseau (RT) en présence de diversité d'émission. A la fin de ces itérations, le procédé pourra, dans un mode de réalisation, aboutir à une pluralité de listes correspondant chacune à une des itérations de cette étape, ou, dans un autre mode de réalisation, aboutir à une seule liste dans laquelle les colonnes ou lignes successives correspondent chacune à une itération de cette étape. Ces deux modes de réalisation permettent alors de connaître, pour les différents nombres (N) de canaux souhaités, les cellules (CR) qui nécessitent l'ajout d'une diversité d'émission dans leur station de base (BTS) respective. Dans un mode de réalisation de l'invention, le procédé comporte également une étape de calcul du coût de la mise en service de chaque canal de transmission dédié au service (MBMS) dont le flux est majoritairement descendant. Si l'étape de création (40) de la liste n'a été itérée qu'une fois pour un nombre (N) de canaux fixe, choisi par l'utilisateur du simulateur (S), cette étape ne permettra de déterminer que le coût de ce nombre (N) fixe de canaux. En revanche, si l'étape de création de la liste a été itérée plusieurs fois pour un nombre (N) croissant de canaux, cette étape, non représentée, sera mise en oeuvre par les moyens (S1) de traitement de données du simulateur (S), grâce à la pluralité d'itérations de l'étape de création (40) de la liste des cellules nécessitant une diversité d'émission, en fonction du nombre (N) croissant de canaux. Le coût de chaque canal pourra alors être déterminé en comparant soit les listes générées soit les différentes lignes d'une même liste.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'optimisation de la capacité d'au moins un réseau (RT) de téléphonie mobile de type WCDMA pour la création, grâce à l'installation d'une diversité d'émission au sein du réseau (RT), d'au moins un service (MBMS) supplémentaire dont le flux est majoritairement descendant, le réseau (RT) comportant une pluralité d'émetteurs/récepteurs, dits stations de base (BTS), établissant des communications avec les terminaux (MP) mobiles communicants présents dans leur champ d'influence, dit cellule (CR), l'ensemble de ces cellules (CR) définissant la zone de couverture du réseau (RT), le procédé étant **caractérisé en ce qu'**il comporte les étapes suivantes mises en oeuvre par au moins un système informatique, dit simulateur (S), comportant des moyens (S2) de mémorisation stockant au moins un algorithme contrôlant les opérations effectuées par des moyens (S1) de traitement de données du simulateur (S) :

   - création (10), par les moyens (S1) de traitement de données du simulateur (S), de données représentatives de prévisions de la couverture du réseau (RT) et de la puissance nécessaire à l'utilisation des services par les détenteurs de terminaux (MP) mobiles communicants présents dans la zone de couverture du réseau (RT), ces données étant générées pour au moins une date (DD) de déploiement planifié du réseau (RT) et regroupées sous la forme d'au moins une carte pour chaque date (DD), dite carte (CT) du trafic planifié, stockée dans les moyens (S2) de mémorisation du simulateur (S) ;
   - calcul (20) de la puissance disponible dans chacune des cellules (CR) du réseau (RT) en absence de diversité d'émission puis calcul (30) de la puissance disponible dans chacune des cellules (CR) du réseau (RT) en présence de diversité d'émission, ces deux calculs, effectués par les moyens (S1) de traitement de données du simulateur (S), dépendant des fréquences, dites porteuses, sur lesquelles reposent les transmissions de données au sein du réseau (RT) et leurs résultats étant stockés dans les moyens (S2) de mémorisation du simulateur (S) ;
   - création (40), par les moyens (S1) de traitement de données du simulateur (S), d'au moins une liste des cellules nécessitant l'installation d'une diversité d'émission, en fonction d'au moins un nombre (N) de canaux de transmission souhaité pour le service (MBMS) dont le flux est majoritairement descendant, cette liste étant stockée dans les moyens (S2) de mémorisation du simulateur (S).

2. Procédé selon la revendication 1, **caractérisé en ce que** les étapes du procédé sont mises en oeuvre en prévision du déploiement du réseau (RT) pour une pluralité de dates (DD) de déploiement planifié du réseau (RT) et itérées pour chacune de ces dates (DD).

3. Procédé selon une des revendications 1 et 2, **caractérisé en ce que** l'étape de création (10) d'au moins une carte (CT) de trafic planifié comporte une étape de calcul (11), par les moyens (S1) de traitement de données du simulateur (S), d'un niveau d'atténuation du signal dans chacune des cellules (CR) du réseau (RT), estimé à partir de données altimétriques et géographiques associées à chacune des stations de base (BTS) du réseau (RT) et stockées dans les moyens (S2) de mémorisation du simulateur (S), cette étape résultat en la création de données représentatives de niveaux d'atténuation attendus en chaque point de chacune des cellules du réseau (RT), stockées dans les moyens (S2) de mémorisation du simulateur (S).

4. Procédé selon la revendication 3, **caractérisé en ce que** l'étape de création (10) d'au moins une carte (CT) de trafic planifié comporte une étape de calcul (12), par les moyens (S1) de traitement de données du simulateur (S), de la probabilité qu'un terminal (MP) mobile communicant présent dans la zone dé couverture du réseau (RT) puisse établir une communication avec au moins une station de base (BTS), pour chacun des différents services offerts au sein du réseau (RT) et pour chacune des cellules (CR) du réseau (RT), cette probabilité d'accès des terminaux (MP) aux services dépendant d'un niveau de réception attendu en chaque point de chacune des cellules du réseau (RT), ce niveau de réception attendu correspondant à la puissance maximale des stations de base (BTS) pondérée par les niveaux d'atténuation attendus en chaque point de chacune des cellules du réseau (RT), la valeur de la puissance maximale des stations de base (BTS) étant stockée dans les moyens (S2) de mémorisation du simulateur (S) et combinée avec les données représentatives des niveaux d'atténuation attendus en chaque point de chacune des cellules du réseau (RT) pour générer, dans ces moyens (S2) de mémorisation, des données représentatives des niveaux de réception attendus en chaque point de chacune des cellules du réseau (RT).

5.  Procédé selon la revendication 4, **caractérisé en ce que** l'étape de calcul (12) de la probabilité d'accès d'un terminal (MP) mobile communicant aux différents services offerts au sein du réseau (RT) comporte une étape de comparaison (121) des niveaux de réception attendus en chaque point, pour chacune des cellules du réseau (RT), avec un seuil (seuil pathloss) minimum de sensibilité pour l'établissement d'une communication entre une station de base (BTS) et un terminal (MP) mobile communicant, pour le service considéré, la valeur standard de ce seuil minimum de sensibilité (seuil pathloss) étant stockée dans les moyens (S2) de mémorisation du simulateur (S), cette probabilité qu'un terminal (MP) mobile communicant établisse une communication avec une station de base (BTS) dépendant de la différence entre le niveau de réception attendu au point où il se trouve dans la cellule (CR) de cette station (BTS) de base par rapport à ce seuil minimum de sensibilité (seuil pathloss).

6.  Procédé selon une des revendications 4 et 5, **caractérisé en ce que** l'étape de calcul (12) de la probabilité d'accès des terminaux (MP) mobiles communicants aux différents services offerts au sein du réseau (RT) prend en compte la possibilité qu'un terminal (MP) mobile communicant puisse établir une communication simultanée, dite soft hand-over (SHO), avec plusieurs stations (BTS) de base en même temps, grâce à une étape de comparaison (122), pour les points appartenant à au moins deux cellules (CR) du réseau (RT) à la fois, de la différence entre les niveaux de réception attendus en ces points par rapport aux stations de base (BTS) de ces cellules (CR) auxquelles ils appartiennent avec un seuil minimum de recouvrement (seuil SHO).

7.  Procédé selon une des revendications 4 à 6, **caractérisé en ce que** l'étape de création (10) d'au moins une carte (CT) de trafic planifié comporte une étape de calcul (13), par les moyens (S1) de traitement de données du simulateur (S), de la puissance d'émission nécessaire dans les stations de base (BTS) pour écouler le trafic planifié au sein du réseau (RT), c'est-à-dire de la puissance nécessaire à l'utilisation des services par les détenteurs de terminaux (MP) mobiles communicants présents dans la zone de couverture du réseau (RT), cette étape consistant en un calcul de la somme des puissances en chacun des points où la probabilité d'accès aux services est non nulle dans chacune des cellules (CR) du réseau (RT), pondérée par un poids attribué au trafic en chacun des points, à partir d'une carte (CTe) de trafic effectif, stockée dans les moyens (S2) de mémorisation du simulateur et comportant des données représentatives d'un trafic effectif mesuré préalablement lors d'un déploiement antérieur du réseau, le poids attribué aux différents points de chacune des cellules (CR) étant pondéré par un coefficient de progression du trafic, stocké également dans les moyens (S2) de mémorisation du simulateur et estimé d'après des prévisions sur l'évolution du trafic, la somme des puissances en chacun des points où la probabilité d'accès aux services est non nulle étant calculée d'après les niveaux de réception attendus calculés lors de l'étape de calcul (12) de la probabilité d'accès des terminaux aux différents services.

8.  Procédé selon la revendication 7, **caractérisé en ce que** l'étape de calcul (13) de la puissance d'émission nécessaire pour écouler le trafic planifié comporte une étape supplémentaire de multiplication de la somme des puissances en chacun des points où la probabilité d'accès aux services est non nulle par un coefficient de réduction de puissance en fonction de l'efficacité des technologies sur lesquelles reposent les différents services offerts au sein du réseau (RT), ce coefficient de réduction de puissance étant stocké dans les moyens (S2) de mémorisation du simulateur (S) et permettant de pondérer la puissance estimée lors de l'étape de calcul (13) de la puissance d'émission nécessaire pour écouler le trafic planifié.

9.  Procédé selon la revendication 8, **caractérisé en ce que** le coefficient de réduction de puissance en fonction de l'efficacité des technologies sur lesquelles reposent les différents services offerts au sein du réseau (RT) est stocké dans les moyens (S2) de mémorisation du simulateur (S) en relation avec les cartes de trafic planifié (CT), les différentes cartes de trafic (CT), correspondant à différentes dates (DD) de déploiement du réseau (RT), pouvant être associées chacune à un coefficient de réduction de puissance différent pour prendre en compte l'évolution de l'efficacité des services due à l'évolution du parc des terminaux mobiles communicants et des technologies de transmission au sein du réseau (RT), le procédé comportant alors une étape de recherche du coefficient de réduction de puissance correspondant à la date (DD) de déploiement à laquelle correspond la carte de trafic planifié (CT) en cours d'utilisation par les moyens (S1) de traitement du simulateur (S).

10. Procédé selon une des revendications 1 à 9, **caractérisé en ce que** l'étape de calcul (20) de la puissance disponible dans chacune des cellules (CR) du réseau (RT) en absence de diversité d'émission comporte une étape de calcul (21) du nombre de porteuses nécessaires pour écouler le trafic planifié, suivie d'une étape de calcul (22) de la puissance disponible après écoulement du trafic planifié, chacune des porteuses possédant une puissance nominale dont un pourcentage est consacré aux canaux de signalisation de cette porteuse et un pourcentage est utilisable pour écouler le trafic, l'étape de calcul (21) du nombre de porteuse consistant, pour chaque cellule (CR) du réseau (RT), en une division de la puissance totale nécessaire pour écouler le trafic par le pourcentage de la puissance nominale utilisable pour écouler le trafic, puis en un arrondi à l'entier supérieur du résultat de cette division, l'étape de calcul (22) de la puissance disponible après écoulement du trafic planifié consistant, pour chaque cellule (CR) du réseau (RT), en une multiplication du pourcentage de la puissance nominale utilisable pour écouler le trafic par ce nombre de porteuses ainsi calculé, puis en une soustraction du résultat de cette multiplication par la puissance totale nécessaire pour écouler le trafic.

11. Procédé selon une des revendications 1 à 10, **caractérisé en ce que** l'étape de calcul (30) de la puissance disponible dans chacune des cellules (CR) du réseau (RT) en présence de diversité d'émission comporte une étape d'estimation (31), par les moyens (S1) de traitement du simulateur (S), du gain apporté par l'ajout de diversité d'émission pour chacun des canaux de transmission au sein du réseau (RT), lors d'une reconfiguration des ressources du réseau (RT) selon au moins un algorithme (RRM) de gestion des ressources, ce gain étant représenté, pour chacun des canaux supportant les différents services offerts au sein du réseau (RT) et pour les canaux de signalisation, par au moins un coefficient de réduction de puissance par ajout de diversité d'émission, stocké dans les moyens (S2) de mémorisation du simulateur (S), cette étape d'estimation (31) du gain consistant en l'utilisation du coefficient de réduction de puissance par ajout de diversité d'émission correspondant à l'algorithme (RRM) de gestion de ressources qui est (ou sera) utilisé pour installer la diversité d'émission au sein du réseau (RT).

12. Procédé selon la revendication 11, **caractérisé en ce que** l'algorithme (RRM) de gestion des ressources concentre la puissance disponible sur la première porteuse commune à chacune des stations de base (BTS) afin d'y libérer ainsi le maximum de puissance pour accueillir le service (MBMS) supplémentaire dont le flux est majoritairement descendant et d'y installer la diversité d'émission.

13. Procédé selon une des revendications 11 et 12, **caractérisé en ce que**, d'une part, l'algorithme (RRM) de gestion des ressources privilégie, sur la porteuse sur laquelle la diversité d'émission est installée, le type de service pour lequel le gain apporté par la diversité d'émission est le plus important et, d'autre part, l'étape de calcul (30) de la puissance disponible dans chacune des cellules (CR) du réseau (RT) en présence de diversité d'émission comporte une étape (32) de calcul de La différence entre le pourcentage de la puissance nominale de cette porteuse avec diversité d'émission utilisable pour écouler le trafic et la puissance consommée sur cette porteuse par ce service pour lequel le gain apporté par la diversité d'émission est le plus important.

14. Procédé selon une des revendications 1 à 13, **caractérisé en ce que** l'étape de création (40) d'une liste des cellules nécessitant l'installation d'une diversité d'émission comporte une étape de recherche (41) de la puissance minimum disponible en présence de diversité d'émission dans l'ensemble des cellules (CR) du réseau (RT), une étape de calcul (42) de la puissance nécessaire à la mise en service d'au moins un nombre (N) déterminé de canaux de transmission permettant la mise en oeuvre du service dont le flux est majoritairement descendant et une étape de recherche (43) du nombre et de la liste des cellules (CR) dont la puissance disponible en absence de diversité d'émission est inférieure à la puissance nécessaire à la mise en service du nombre (N) déterminé de canaux de transmission et nécessitant donc l'installation d'une diversité d'émission.

15. Procédé selon la revendication 14, **caractérisé en ce que** les étapes de calcul (42) de la puissance nécessaire à la mise en service d'au moins un nombre (N) déterminé de canaux de transmission et de recherche (43) du nombre et de la liste des cellules (CR) nécessitant l'installation d'une diversité d'émission sont itérées un nombre de fois correspondant à un nombre maximum (Nmax) de canaux de transmission dédiés au service (MBMS) dont le flux est majoritairement descendant, les itérations successives étant réalisées pour un nombre (N) de canaux croissant jusqu'à atteindre le nombre (Nmax) maximum de canaux, ce nombre (Nmax) de canaux maximum étant calculé grâce à l'étape de recherche (41) de la puissance minimum disponible dans l'ensemble des cellules (CR) du réseau (RT) en présence de diversité d'émission.

16. Procédé selon une des revendications 1 à 15, **caractérisé en ce qu'**il comporte une étape de calcul du coût de la mise en service de chaque canal de transmission dédié au service (MBMS) dont le flux est majoritairement descendant, mise en oeuvre par les moyens (S1) de traitement de données du simulateur (S), grâce à la pluralité d'itérations de l'étape de création (40) de la piste des cellules nécessitant une diversité d'émission, en fonction du nombre (N) croissant de canaux.

## Patentansprüche

1. Verfahren zum Optimieren der Kapazität mindestens eines Mobiltelefonienetzwerks (RT) des WCDMA-Typs zum Erzeugen mindestens eines zusätzlichen Dienstes (MBMS), dessen Fluss hauptsächlich absteigend ist, mittels Einrichtens einer Sendediversität innerhalb des Netzwerks (RT), wobei das Netzwerk (RT) eine Mehrzahl von Spendern/ Empfängern aufweist, die als Basisstationen (BTS) bezeichnet werden, die Kommunikationen mit den kommunizierenden mobilen Endgeräten (MP) herstellen, die sich in ihrem Einflussbereich befinden, der als Zelle (CR) bezeichnet wird, wobei die Gesamtheit dieser Zellen (CR) den Abdeckungsbereich des Netzwerks (RT) definiert, wobei das Verfahren **dadurch gekennzeichnet ist, dass** es die folgenden Schritte aufweist, die mittels mindestens eines Computersystems durchgeführt werden, das als Simulator (S) bezeichnet wird, das Speichermittel (S2) aufweist, die mindestens einen Algorithmus speichern, der die Operationen steuert, die mittels Datenverarbeitungsmitteln (S1) des Simulators (S) durchgeführt werden:

   - Erzeugen (10) von Daten, mittels der Datenverarbeitungsmittel (S1) des Simulators (S), die repräsentativ sind für Vorhersagen der Netzabdeckung (RT) und der Leistung, die für die Nutzung der Dienste durch die Halter von kommunizierenden mobilen Endgeräten (MP) benötigt wird, die sich im Abdeckungsbereich des Netzwerks (RT) befinden, wobei die Daten für mindestens einen geplanten Ausbreitungszeitpunkt (DD) des Netzes (RT) erzeugt und in Form mindestens einer Karte, die als Karte (CT) des geplanten Verkehrs bezeichnet wird, die in den Speichermitteln (S2) des Simulators (S) gespeichert wird, für jeden Zeitpunkt (DD) umgruppiert werden,
   - Berechnen (20) der verfügbaren Leistung in jeder der Zellen (CR) des Netzes (RT) in Abwesenheit einer Sendediversität, anschließend Berechnen (30) der verfügbaren Leistung in jeder der Zellen (CR) des Netzes (RT) in Anwesenheit einer Sendediversität, wobei die beiden Berechnungen, die mittels der Datenverarbeitungsmittel (S1) des Simulators durchgeführt werden, von den Frequenzen, die als Trägerfrequenzen bezeichnet werden, abhängen, auf denen die Datenübertragungen innerhalb des Netzes (RT) beruhen, und wobei ihre Ergebnisse in den Speichermitteln (S2) des Simulators (S) gespeichert werden,
   - Erzeugen (40), mittels der Datenverarbeitungsmittel (S1) des Simulators (S), mindestens einer Liste der Zellen, die das Einrichten einer Sendediversität benötigen, in Abhängigkeit von mindestens einer für den Dienst (MBMS) gewünschten Anzahl (N) von Übertragungskanälen, dessen Fluss hauptsächlich absteigend ist, wobei die Liste in den Speichermitteln (S2) des Simulators (S) gespeichert wird.

2. Verfahren gemäß Anspruch 1, **dadurch gekennzeichnet, dass** die Schritte des Verfahrens in Voraussicht der Ausbreitung des Netzes (RT) für eine Mehrzahl von Zeitpunkten (DD) der geplanten Ausbreitung des Netzes (RT) durchgeführt werden und für jeden dieser Zeitpunkte (DD) wiederholt werden.

3. Verfahren gemäß einem der Ansprüche 1 und 2, **dadurch gekennzeichnet, dass** der Schritt des Erzeugens (10) mindestens einer geplanter-Verkehr-Karte (CT) einen Schritt des Berechnens (11) mittels der Datenverarbeitungsmittel (S1) des Simulators (S) eines Abschwächungspegels des Signals in jeder der Zellen (CR) des Netzes (RT) aufweist, der ausgehend von Höhenmessungsdaten und geographischen Daten geschätzt wird, die jeder der Basisstationen (BTS) des Netzes (RT) zugeordnet werden und in den Speichermitteln (S2) des Simulators (S) gespeichert werden, wobei der Schritt zum Erzeugen von Daten führt, die für an jedem Punkt von jeder der Zellen des Netzes (RT) erwartete Abschwächungspegel repräsentativ sind, die in den Speichermitteln (S2) des Simulators (S) gespeichert werden.

4. Verfahren gemäß Anspruch 3, **dadurch gekennzeichnet, dass** der Schritt des Erzeugens (10) mindestens einer geplanter-Verkehr-Karte (CT) einen Schritt des Berechnens (12), mittels der Datenverarbeitungsmittel (S1) des Simulators (S), der Wahrscheinlichkeit aufweist, dass ein kommunizierendes mobiles Endgerät (MP), das sich in dem Abdeckungsbereich des Netzes (RT) befindet, eine Kommunikation mit mindestens einer Basisstation (BTS) aufbauen kann, für jeden der verschiedenen Dienste, die innerhalb des Netzwerkes (RT) angeboten werden, und für jede der Zellen (CR) des Netzes (RT), wobei diese Wahrscheinlichkeit des Zugriffs der Endgeräte (MP) auf die Dienste von einem Empfangspegel abhängt, der an jedem Punkt von jeder der Zellen des Netzes (RT) erwartet wird, wobei der erwartete Empfangspegel der maximalen Leistung der Basisstationen (BTS) entspricht, die durch die an jedem Punkt von jeder der Zellen des Netzes (RT) erwarteten Abschwächungspegel gewichtet wird, wobei der Wert der maximalen Leistung der Basisstationen (BTS) in den Speichermitteln (S2) des Simulators (S) gespeichert wird und mit den Daten kombiniert wird, die für die an jedem Punkt von jeder der Zellen des Netzes (RT) erwarteten Abschwächungspegel repräsentativ sind, um in diesen Speichermitteln (S2) Daten zu erzeugen, die für die an jedem Punkt von jeder der Zellen des Netzes (RT) erwarteten Empfangspegel repräsentativ sind.

5. Verfahren gemäß Anspruch 4, **dadurch gekennzeichnet, dass** der Schritt des Berechnens (12) der Zugriffswahrscheinlichkeit eines kommunizierenden mobilen Endgerätes (MP) auf die verschiedenen innerhalb eines Netzes (RT) angebotenen Dienste aufweist: einen Schritt des Vergleichens (121) der an jedem Punkt erwarteten Empfangspegel, für jede der Zellen des Netzes (RT), mit einer minimalen Sensibilitätsschwelle (Pfadverlustschwelle) für das Herstellen einer Kommunikation zwischen einer Basisstation (BTS) und einem kommunizierenden mobilen Endgerät (MP) für den betrachteten Dienst, wobei der Standardwert dieser minimalen Sensibilitätsschwelle (Pfadverlustschwelle) in den Speichermitteln (S2) des Simulators (S) gespeichert wird, wobei die Wahrscheinlichkeit, dass ein kommunizierendes mobiles Endgerät (MP) eine Kommunikation mit einer Basisstation (BTS) herstellt, von dem Unterschied zwischen dem Empfangspegel, der an dem Punkt erwartet wird, wo es sich in der Zelle (CR) dieser Basisstation (BTS) befindet, in Bezug auf die minimale Sensibilitätsschwelle (Pfadverlustschwelle) abhängt.

6. Verfahren gemäß einem der Ansprüche 4 und 5, **dadurch gekennzeichnet, dass** der Schritt des Berechnens (12) der Wahrscheinlichkeit des Zugriffs der kommunizierenden mobilen Endgeräte (MP) auf die verschiedenen Dienste, die innerhalb des Netzwerks (RT) angeboten werden, die Möglichkeit berücksichtigt, dass ein kommunizierendes mobiles Endgerät (MP) eine simultane Kommunikation, die als Soft-Handover (SHO) bezeichnet wird, mit mehreren Basisstationen (BTS) gleichzeitig herstellen kann, mit Hilfe eines Schrittes des Vergleichens (122) für die Punkte, die gleichzeitig zu mindestens zwei Zellen (CR) des Netzwerkes (RT) gehören, des Unterschieds zwischen den an diesen Punkten erwarteten Empfangspegeln bezüglich der Basisstationen (BTS) dieser Zellen (CR), zu denen sie gehören, mit einer minimalen Abdeckungsschwelle (SHO-Schwelle).

7. Verfahren gemäß einem der Ansprüche 4 bis 6, **dadurch gekennzeichnet, dass** der Schritt des Erzeugens (10) mindestens einer geplanter-Verkehr-Karte (CT) aufweist: einen Schritt des Berechnens (13), mittels der Datenverarbeitungsmittel (S1) des Simulators (S), der Sendeleistung, die in den Basisstationen (BTS) benötigt wird, um den geplanten Verkehr innerhalb des Netzwerkes (RT) fließen zu lassen, das heißt der Leistung, die für die Nutzung der Dienste durch die Halter von kommunizierenden mobilen Endgeräten (MP), die sich in der Abdeckungszone des Netzwerks (RT) befinden, benötigt wird, wobei der Schritt aus einem Berechnen der Summe der Leistungen an jedem der Punkte besteht, wo die Wahrscheinlichkeit des Zugriffs auf die Dienste in jeder der Zellen (CR) des Netzwerks (RT) nicht Null beträgt, gewichtet durch ein Gewicht, das dem Verkehr an jedem der Punkte zugeordnet wird, ausgehend von einer tatsächlicher-Verkehr-Karte (CTe), die in den Speichermitteln (S2) des Simulators gespeichert ist und Daten aufweist, die repräsentativ sind für einen tatsächlichen Verkehr, der zuvor bei einer vorherigen Ausbreitung des Netzwerkes gemessen wurde, wobei das den verschiedenen Punkten jeder der Zellen (CR) zugeordnete Gewicht durch einen Verkehrsprogressionskoeffizienten gewichtet wird, der ebenfalls in den Speichermitteln (S2) des Simulators gespeichert ist und gemäß Vorhersagen bezüglich der Entwicklung des Verkehrs geschätzt wird, wobei die Summe der Leistungen an jedem der Punkte, wo die Wahrscheinlichkeit des Zugriffs auf die Dienste nicht Null ist, gemäß den erwarteten Empfangspegeln berechnet wird, die während des Schrittes des Berechnens (12) der Wahrscheinlichkeit des Zugriffs der Endgeräte auf die verschiedenen Dienste berechnet werden.

8. Verfahren gemäß Anspruch 7, **dadurch gekennzeichnet, dass** der Schritt des Berechnens (13) der Sendeleistung, die benötigt wird, um den geplanten Verkehr fließen zu lassen, aufweist: einen zusätzlichen Schritt des Multiplizierens der Summe der Leistungen an jedem der Punkte, wo die Wahrscheinlichkeit des Zugriffs auf die Dienste nicht Null ist, mit einem Leistungsreduktionskoeffizienten in Abhängigkeit von der Wirksamkeit der Technologien, auf denen die verschiedenen Dienste beruhen, die innerhalb des Netzwerks (RT) angeboten werden, wobei der Leistungsreduktionskoeffizient in den Speichermitteln (S2) des Simulators gespeichert wird und ermöglicht, die Leistung zu gewichten, die während des Schrittes des Berechnens (13) der Sendeleistung geschätzt wird, die benötigt wird, um den geplanten Verkehr fließen zu lassen.

9. Verfahren gemäß Anspruch 8, **dadurch gekennzeichnet, dass** der Leistungsreduktionskoeffizient in Abhängigkeit von der Wirksamkeit der Technologien, auf denen die verschiedenen Dienste beruhen, die innerhalb des Netzwerks (RT) angeboten werden, in den Speichermitteln (S2) des Simulators (S) in Verbindung mit den geplanter-Verkehr-Karten (CT) gespeichert wird, wobei die verschiedenen Verkehrskarten (CT), die verschiedenen Ausbreitungszeitpunkten (DD) des Netzwerks (RT) entsprechen, jeweils einem anderen Leistungsreduktionskoeffizienten zugeordnet werden können, um die Entwicklung der Wirksamkeit der Dienste aufgrund der Entwicklung des Bestands der kommunizierenden mobilen Endgeräte und der Übertragungstechnologien innerhalb des Netzwerkes (RT) zu berücksichtigen, wobei das Verfahren dann einen Schritt des Suchens des Leistungsreduktionskoeffizienten aufweist, der dem Ausbreitungszeitpunkt (DD) entspricht, dem die geplanter-Verkehr-Karte (CT) während der Nutzung durch die Verarbeitungsmittel (S1) des Simulators (S) entspricht.

10. Verfahren gemäß einem der Ansprüche 1 bis 9, **dadurch gekennzeichnet, dass** der Schritt des Berechnens (20) der verfügbaren Leistung in jeder der Zellen (CR) des Netzwerks (RT) in Abwesenheit einer Sendediversität aufweist: einen Schritt des Berechnens (21) der Anzahl von Trägerfrequenzen, die benötigt werden, um den geplanten Verkehr fließen zu lassen, gefolgt von einem Schritt des Berechnens (22) der Leistung, die nach dem Fließen des geplanten Verkehrs verfügbar ist, wobei jede der Trägerfrequenzen eine Nennleistung besitzt, von der ein Prozentsatz den Signalisierungskanälen der Trägerfrequenz gewidmet ist, und von der ein Prozentsatz verwendbar ist, um den Verkehr fließen zu lassen, wobei der Schritt des Berechnens (21) der Trägerfrequenzzahl für jede Zelle (CR) des Netzwerkes (RT) aus einem Dividieren der Gesamtleistung, die notwendig ist, um den Verkehr fließen zu lassen, durch den Prozentsatz der Nennleistung, die verwendbar ist, um den Verkehr fließen zu lassen, und anschließend aus einem Aufrunden des Ergebnisses dieses Dividierens auf die obere Ganzzahl besteht, wobei der Schritt des Berechnens (22) der verfügbaren Leistung nach dem Fließen des geplanten Verkehrs für jede Zelle (CR) des Netzwerks (RT) aus einem Multiplizieren des Prozentsatzes der Nennleistung, die verwendbar ist, um den Verkehr fließen zu lassen, mit der Anzahl von Trägerfrequenzen, die auf diese Weise berechnet wird, und anschließend aus einem Subtrahieren des Ergebnisses der Multiplikation mit der Gesamtleistung, die erforderlich ist, um den Verkehr fließen zu lassen, besteht.

11. Verfahren gemäß einem der Ansprüche 1 bis 10, **dadurch gekennzeichnet, dass** der Schritt des Berechnens (30) der verfügbaren Leistung in jeder der Zellen (CR) des Netzwerks (RT) in Anwesenheit einer Sendediversität aufweist: einen Schritt des Schätzens (31), mittels der Verarbeitungsmittel (S1) des Simulators (S), der Verstärkung, die durch den Zusatz einer Sendediversität für jeden der Übertragungskanäle innerhalb des Netzwerks (RT) beigesteuert wird, bei einer Neukonfiguration der Ressourcen des Netzwerks (RT) gemäß mindestens einem Algorithmus (RRM) zum Verwalten der Ressourcen, wobei die Verstärkung für jeden der Kanäle, die die verschiedenen Dienste unterstützen, die innerhalb des Netzwerks (RT) angeboten werden, und für die Signalisierungskanäle durch mindestens einen Leistungsreduktionskoeffizienten durch Zusatz einer Sendediversität repräsentiert ist, der in den Speichermitteln (S2) des Simulators (S) gespeichert wird, wobei der Schritt des Schätzens (31) der Verstärkung aus dem Verwenden des Leistungsreduktionskoeffizienten durch Zusatz einer Sendediversität besteht, die dem Ressourcen-Verwaltungs-Algorithmus (RRM) entspricht, der verwendet wird (oder verwendet werden wird), um die Sendediversität innerhalb des Netzwerks (RT) einzurichten.

12. Verfahren gemäß Anspruch 11, **dadurch gekennzeichnet, dass** der Ressourcen-Verwaltungs-Algorithmus (RRM) die auf der ersten gemeinsamen Trägerfrequenz verfügbare Leistung auf jede der Basisstationen (BTS) konzentriert, um dort auf diese Weise das Maximum an Leistung freizusetzen, um den zusätzlichen Dienst (MBMS) zu empfangen, dessen Fluss hauptsächlich absteigend ist, und um dort die Sendediversität einzurichten.

13. Verfahren gemäß einem der Ansprüche 11 und 12, **dadurch gekennzeichnet, dass** einerseits der Ressourcen-Verwaltungs-Algorithmus (RRM) auf der Trägerfrequenz, auf der die Sendediversität eingerichtet wird, den Typ Dienst bevorzugt, für den die durch die Sendediversität beigesteuerte Verstärkung am stärksten ist, und andererseits der Schritt des Berechnens (30) der verfügbaren Leistung in jeder der Zellen (CR) des Netzes (RT) in Anwesenheit einer Sendediversität aufweist: einen Schritt (32) des Berechnens der Differenz zwischen dem Prozentsatz der Nennleistung der Trägerfrequenz mit Sendediversität, die verwendbar ist, um den Verkehr fließen zu lassen, und der Leistung, die auf dieser Trägerfrequenz durch diesen Dienst verbraucht wird, für den die durch die Sendediversität beigesteuerte Verstärkung am stärksten ist.

14. Verfahren gemäß einem der Ansprüche 1 bis 13, **dadurch gekennzeichnet, dass** der Schritt des Erzeugens (40) einer Liste der Zellen, die das Einrichten einer Sendediversität benötigen, aufweist: einen Schritt des Suchens (41) der minimalen Leistung, die in Anwesenheit einer Sendediversität in der Gesamtheit der Zellen (CR) des Netzwerks (RT) verfügbar ist, einen Schritt des Berechnens (42) der Leistung, die für das Inbetriebnehmen mindestens einer bestimmten Anzahl (N) von Übertragungskanälen, die das Anwenden des Dienstes ermöglichen, dessen Fluss hauptsächlich absteigend ist, benötigt wird, und einen Schritt des Suchens (43) der Anzahl und der Liste der Zellen (CR), deren verfügbare Leistung in Abwesenheit einer Sendediversität kleiner als die Leistung ist, die für das Inbetriebnehmen der bestimmten Anzahl (N) von Übertragungskanälen benötigt wird, und die somit das Einrichten einer Sendediversität erfordert.

15. Verfahren gemäß Anspruch 14, **dadurch gekennzeichnet, dass** die Schritte zum Berechnen (42) der Leistung, die für das Inbetriebnehmen mindestens einer bestimmten Anzahl (N) von Übertragungskanälen benötigt wird, und des Suchens (43) der Anzahl und der Liste der Zellen (CR), die das Einrichten einer Sendediversität benötigen, eine Anzahl von Malen wiederholt werden, die einer maximalen Anzahl (Nmax) von Übertragungskanälen entspricht, die für den Dienst (MBMS) vorgesehen sind, dessen Fluss hauptsächlich absteigend ist, wobei die aufeinanderfolgenden Wiederholungen für eine steigende Anzahl (N) von Kanälen durchgeführt werden, bis die maximale Anzahl (Nmax) von Kanälen erreicht ist, wobei die maximale Anzahl (Nmax) von Kanälen mit Hilfe des Schrittes des Suchens (41) der minimalen verfügbaren Leistung in der Gesamtheit der Zellen (CR) des Netzwerks (RT) in Anwesenheit einer Sendediversität berechnet wird.

16. Verfahren gemäß einem der Ansprüche 1 bis 15, **dadurch gekennzeichnet, dass** es einen Schritt zum Berechnen der Kosten des Inbetriebnehmens jedes Übertragungskanals, der für den Dienst (MBMS) vorgesehen ist, dessen Fluss überwiegend absteigend ist, aufweist, der mittels der Datenverarbeitungsmittel (S1) des Simulators (S) durchgeführt wird, mit Hilfe der Mehrzahl von Wiederholungen des Schrittes zum Erzeugen (40) der Liste der Zellen, die eine Sendediversität benötigen, in Abhängigkeit von der steigenden Anzahl (N) von Kanälen.

**Claims**

1. Method for optimisation of the capacity of at least one WCDMA type mobile telephone network (RT) for the creation, by virtue of the installation of a diversity of transmission within the network (RT), of at least one additional service (MBMS) with a mainly downlink flow, the network (RT) having a plurality of transmitters/receivers, referred to as base transceiver stations (BTS), establishing communications with the communicating mobile terminals (MP) present in their field of influence, referred to as a cell (CR), the totality of these cells (CR) defining the zone of coverage of the network (RT), the method being **characterised in that** it comprises the following steps implemented by at least one data-processing system, referred to as a simulator (S), having means (S2) for storage holding at least one algorithm controlling the operations carried out by means (S1) for processing data of the simulator (S):

- creation (10), by the means (S1) for processing data of the simulator (S), of data representative of forecasts for the coverage of the network (RT) and of the power necessary for utilisation of the services by the owners of communicating mobile terminals (MP) present in the zone of coverage of the network (RT), this data being generated for at least one planned date of deployment (DD) of the network (RT) and grouped in the form of at least one map for each date (DD), referred to as a planned traffic map (CT), stored in the means (S2) for storage of the simulator (S);
- calculation (20) of the power available in each of the cells (CR) of the network (RT) in the absence of diversity of transmission then calculation (30) of the power available in each of the cells (CR) of the network (RT) in the presence of diversity of transmission, these two calculations, carried out by the means (S1) for processing data of the simulator (S), depending on the frequencies, referred to as carriers, on which the transmissions of data within the network (RT) are carried and their results being stored in the means (S2) for storage of the simulator (S);
- creation (40), by the means (S1) for processing data of the simulator (S), of at least one list of the cells requiring the installation of a diversity of transmission, as a function of at least one number (N) of transmission channels desired for the service (MBMS) with a mainly downlink flow, this list being stored in the means (S2) for storage of the simulator (S).

2. Method according to claim 1, **characterised in that** the steps of the method are implemented in anticipation of the deployment of the network (RT) for a plurality of planned dates of deployment (DD) of the network (RT) and iterated for each of these dates (DD).

3. Method according to one of claims 1 and 2, **characterised in that** the step for creation (10) of at least one planned traffic map (CT) comprises a step for calculation (11), by the means (S1) for processing data of the simulator (S), of a level of attenuation of the signal in each of the cells (CR) of the network (RT) estimated from altimetric data and geographical data associated with each of the base transceiver stations (BTS) of the network (RT) and stored in the means (S2) for storage of the simulator (S), this step resulting in the creation of data representative of levels of attenuation expected at each point in each of the cells of the network (RT), stored in the means (S2) for storage of the simulator (S).

4. Method according to claim 3, **characterised in that** the step for creation (10) of at least one planned traffic map (CT) comprises a step for calculation (12), by the means (S1) for processing data of the simulator (S), of the probability of a communicating mobile terminal (MP) present in the zone of coverage of the network (RT) being able to establish communication with at least one base transceiver station (BTS), for each of the different services offered within the network (RT) and for each of the cells (CR) of the network (RT), this probability of access of the terminals (MP) to the services depending on a level of reception expected at each point in each of the cells of the network (RT), this expected level of reception corresponding to the maximum power of the base transceiver stations (BTS) weighted by the levels of attenuation expected at each point in each of the cells of the network (RT), the value for the maximum power of the base transceiver station (BTS) being stored in the means (S2) for storage of the simulator (S) and combined with the data representative of the levels of attenuation expected at each point in each of the cells of the network (RT) in order to generate, in these means (S2) for storage, data representative of the levels of reception expected at each point in each of the cells of the network (RT).

5. Method according to claim 4, **characterised in that** the step for calculation (12) of the probability of access of a communicating mobile terminal (MP) to the different services offered within the network (RT) comprises a step for comparison (121) of the levels of reception expected at each point, for each of the cells of the network (RT), with a minimum sensitivity threshold (path loss threshold) for the establishment of communication between a base transceiver station (BTS) and a communicating mobile terminal (MP), for the service concerned, the standard value for this minimum sensitivity threshold (path loss threshold) being stored in the means (S2) for storage of the simulator (S), this probability of a communicating mobile terminal (MP) being able to establish communication with a base transceiver station (BTS) depending on the difference between the level of reception expected at the point at which it is located in the cell (CR) of this base transceiver station (BTS) in relation to this minimum sensitivity threshold (path loss threshold).

6. Method according to one of claims 4 and 5, **characterised in that** the step for calculation (12) of the probability of access of the communicating mobile terminals (MP) to the different services offered within the network (RT) takes into account the possibility of a communicating mobile terminal (MP) being able to establish simultaneous communication, referred to as soft handover (SHO), with a plurality of base transceiver stations (BTS) at the same time, thanks to a step for comparison (122), for the points belonging to at least two cells (CR) of the network (RT) at the same time, of the difference between the levels of reception expected at these points in relation to the base transceiver stations (BTS) of these cells (CR) to which they belong with a minimum overlap threshold (SHO threshold).

7. Method according to one of claims 4 to 6, **characterised in that** the step for creation (10) of at least one planned traffic map (CT) comprises a step for calculation (13), by the means (S1) for processing data of the simulator (S), of the transmission power necessary in the base transceiver stations (BTS) to handle the planned traffic within the network (RT), i.e. the power necessary for the use of the services by the owners of communicating mobile terminals (MP) present in the zone of coverage of the network (RT), this step consisting of a calculation of the sum of the powers at each of the points at which the probability of access to the services is other than zero in each of the cells (CR) of the network (RT), weighted by a weight attributed to the traffic at each of the points, from an effective traffic map (CTe), stored in the means (S2) for storage of the simulator and having data representative of an effective traffic measured previously at the time of a prior deployment of the network, the weight attributed to the different points in each of the cells (CR) being weighted by a coefficient for traffic progression, also stored in the means (S2) for storage of the simulator and estimated from forecasts of the development of the traffic, the sum of the powers at each of the points at which the probability of access to the services is other than zero being calculated from the expected levels of reception calculated in the step for calculation (12) of the probability of access of the terminals to the different services.

8. Method according to claim 7, **characterised in that** the step for calculation (13) of the transmission power necessary to handle the planned traffic comprises an additional step for multiplication of the sum of the powers at each of the points at which the probability of access to the services is other than zero by a coefficient for reduction of a power as a function of the effectiveness of the technologies supporting the different services offered within the network (RT), this coefficient for reduction of power being stored in the means (S2) for storage of the simulator (S) and making it possible to weight the estimated power in the step for calculation (13) of the transmission power necessary to handle the planned traffic.

9. Method according to claim 8, **characterised in that** the coefficient for reduction of power as a function of the effectiveness of the technologies supporting the different services offered within the network (RT) is stored in the means (S2) for storage of the simulator (S) in relation with the planned traffic maps (CT), the different traffic maps (CT), corresponding to different dates of deployment (DD) of the network (RT), each being capable of being associated with a different coefficient for reduction of power to take account of the development of the effectiveness of the services due to the development of the communicating mobile terminals and the technologies for transmission within the network (RT), the method then comprising a step for searching for the coefficient for reduction of power corresponding to the date of deployment (DD) to which the planned traffic map (CT) corresponds in the course of use by the means (S1) for processing data of the simulator (S).

10. Method according to one of claims 1 to 9, **characterised in that** the step for calculation (20) of the power available in each of the cells (CR) of the network (RT) in the absence of diversity of transmission comprises a step for calculation (21) of the number of carriers necessary to handle the planned traffic, followed by a step for calculation (22) of the power available after handling of the planned traffic, each of the carriers having a nominal power of which a percentage is devoted to the signalling channels of this carrier and a percentage can be used to handle the traffic, the step for calculation (21) of the number of carriers consisting, for each cell (CR) of the network (RT), of a division of the total power necessary to handle the traffic by the percentage of the nominal power that can be used to handle the traffic, then a rounding up of the result of this division to the next higher integer, the step for calculation (22) of the power available after handling of the planned traffic consisting, for each cell (CR) of the network (RT), of a multiplication of the percentage of the nominal power that can be used to handle the traffic by this number of carriers as calculated, then a subtraction of the result of this multiplication by the total power necessary to handle the traffic.

11. Method according to one of claims 1 to 10, **characterised in that** the step for calculation (30) of the power available in each of the cells (CR) of the network (RT) in the presence of diversity of transmission comprises a step for estimation (31), by the means (S1) for processing data of the simulator (S), of the gain produced by the addition of diversity of transmission for each of the transmission channels within the network (RT), when the resources of the network (RT) are reconfigured according to at least one radio resource management algorithm (RRM), this gain being represented, for each of the channels carrying the different services offered within the network (RT) and for the signalling channels, by at least one coefficient for reduction of power by addition of diversity of transmission, stored in the means (S2) for storage of the simulator (S), this step for estimation (31) of the gain consisting in use of the coefficient for reduction of power by addition of diversity of transmission corresponding to the radio resource management algorithm (RRM) which is (or will be) used to install the diversity of transmission within the network (RT).

12. Method according to claim 11, **characterised in that** the radio resource management algorithm (RRM) concentrates the available power on the first carrier common to each of the base transceiver stations (BTS) in order to thus release the maximum power to receive the additional service (MBMS) with a mainly downlink flow and to install the diversity of transmission therein.

13. Method according to one of claims 11 and 12, **characterised in that**, on the one hand, the radio resource management algorithm (RRM) gives priority, on the carrier on which the diversity of transmission is installed, to the type of service for which the gain produced by the diversity of transmission is the greatest and, on the other hand, the step for calculation (30) of the power available in each of the cells (CR) of the network (RT) in the presence of diversity of transmission comprises a step (32) for calculation of the difference between the percentage of the nominal power of this carrier with diversity of transmission which can be used to handle the traffic and the power consumed on this carrier by this service for which the gain produced by the diversity of transmission is the greatest.

14. Method according to one of claims 1 to 13, **characterised in that** the step for creation (40) of a list of the cells requiring the installation of a diversity of transmission comprises a step for searching (41) for the minimum power available in the presence of diversity of transmission in the totality of the cells (CR) of the network (RT), a step for calculation (42) of the power necessary to bring into service at least a given number (N) of transmission channels allowing the implementation of the service with a mainly downlink flow and a step for searching (43) for the number and the list of the cells (CR) of which the available power in the absence of diversity of transmission is less than the power necessary to bring into service the given number (N) of transmission channels and requiring thus the installation of a diversity of transmission.

15. Method according claim 14, **characterised in that** the steps for calculation (42) of the power necessary to bring into service at least a given number (N) of transmission channels and for searching (43) for the number and the list of the cells (CR) requiring the installation of a diversity of transmission are iterated a number of times corresponding to a maximum number (Nmax) of transmission channels dedicated to the service (MBMS) with a mainly downlink flow, the successive iterations being carried out for a growing number (N) of channels up to the maximum number (Nmax) of channels, this maximum number (Nmax) of channels being calculated thanks to the step for searching (41) for the minimum power available in the totality of the cells (CR) of the network (RT) in the presence of diversity of transmission.

16. Method according to one of claims 1 to 15, **characterised in that** it comprises a step for calculation of the cost of bringing into service each transmission channel dedicated to the service (MBMS) with a mainly downlink flow, implementation by the means (S1) for processing data of the simulator (S), thanks to the plurality of iterations of the step for creation (40) of the list of the cells requiring a diversity of transmission, as a function of the growing number (N) of channels.

## FIGURE 1

```
        ┌─────────────────────────┐
        │ Choix d'une date (DD)   │◄■■··■■··■■··■■··■■··■■··■■··■■■┐
        │ de déploiement planifié │                               ┊
        └─────────────────────────┘                               ┊
                     ┊                                             ┊
                     ▼                                             ┊
   10 ┐  ┌─────────────────────────┐                              ┊
        │ Création de carte (CT)  │                               ┊
        │ de trafic planifié      │                               ┊
        └─────────────────────────┘                               ┊
                     ▼                                             ┊
   20 ┐  ┌──────────────────────────────────┐                     ┊
        │ Calcul de la puissance disponible │                     ┊
        │ en absence de diversité d'émission│                     ┊
        └──────────────────────────────────┘                     ┊
                     ▼                                             ┊
   30 ┐  ┌──────────────────────────────────┐                     ┊
        │ Calcul de la puissance disponible │                     ┊
        │ en présence de diversité d'émission│                    ┊
        └──────────────────────────────────┘                     ┊
              ┌──────────┴──────────┐                             ┊
              ▼                     ▼                             ┊
   ┌────────────────────┐  ┌────────────────────┐                ┊
   │ Choix d'un nombre N de │ Nombre de canaux │                 ┊
   │ canaux de transmission │ de transmission N = 1│              ┊
   └────────────────────┘  └────────────────────┘                ┊
              ┊                     ┊      ┌──────┐               ┊
              ▼                     ▼      ┊      ┊               ┊
   40 ┐  ┌──────────────────────────────────────┐                ┊
        │ Création de liste des cellules nécessitant│            ┊
        │ une diversité d'émission pour N canaux │                ┊
        └──────────────────────────────────────┘                 ┊
                     ▼                                            ┊
              ┌──────────┐      ◄NON►──►┌─────────┐               ┊
              │ N = Nmax ?├──┤          │ N = N + 1│              ┊
              └──────────┘   └──◄OUI►──►┌─────┐                  ┊
                                        │ FIN ├■■··■■··■■─────────┘
                                        └─────┘
```

## FIGURE 2

Création de carte (CT) de trafic planifié

Calculs de niveaux d'atténuation

Calcul de la probabilité d'accès aux services

Comparaison : Seuil pathloss

Comparaison : Seuil SHO

Calcul de la puissance nécessaire pour écouler le trafic

$$Ptot(i, date) = Coeff\_trafic(date) \times$$

$$\sum_{serv=R99;HSDPA} efficacité(serv) \times \iint_{x,y} poids(x, y) \times p\_acces(i, serv, x, y)$$

## FIGURE 3

Calcul de la puissance disponible en présence de diversité d'émission

Estimation du gain apporté par la diversité d'émission

Calcul de la différence : Puissance utilisable - Puissance consommée

$$Ptxdiv(i, date) = Pnom \times \left(1 - \frac{N}{Csig}\right) - \left(\frac{Pnom \times (1 - N) - Plibre(i, date)}{Max(CR99; CHSDPA)}\right)$$

# FIGURE 4

20

Calcul de la puissance disponible en absence de diversité d'émission

21 — Calcul du nombre de porteuses nécessaires pour écouler le trafic

$$Np(i, date) = \text{entier supérieur}\left(\frac{Ptot(i, date) \cdot}{(1 - N) \times Pnom)}\right)$$

22 — Calcul de la puissance disponible après écoulement du trafic

$$Plibre(i, date) = Np(i, date) \times Pnom \times (1 - N) - Ptot(i, date)$$

# FIGURE 5

40

Création de liste des cellules nécessitant une diversité d'émission

41 — Recherche de la puissance disponible minimum
Calcul du nombre Nmax de canaux de transmission

Choix d'un nombre N de canaux de transmission

Nombre de canaux de transmission N = 1

42 — Calcul de la puissance nécessaire pour N canaux de transmission

43 — Recherche du nombre et de la liste de cellules nécessitant une diversité d'émission

puissance maximum atteinte?
N = Nmax ?

NON → N = N + 1

OUI → FIN

# FIGURE 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006033603 A